# EUROPEAN PATENT SPECIFICATION

(11) **EP 2 151 601 B1**
(45) Date of publication and mention of the grant of the patent: **17.10.2012**
(21) Application number: 08827990.6
(22) Date of filing: 13.08.2008
(51) Int. Cl.: F16H 3/093

(54) **STEPPED AUTOMATIC TRANSMISSION DEVICE, POWER UNIT WITH THE TRANSMISSION DEVICE, AND MOTORCYCLE WITH THE POWER UNIT**
AUTOMATISCHE SCHRITTGETRIEBEVORRICHTUNG, ANTRIEBSEINHEIT MIT DER GETRIEBEVORRICHTUNG UND MOTORRAD MIT DER ANTRIEBSEINHEIT
DISPOSITIF DE TRANSMISSION AUTOMATIQUE ÉTAGÉE, UNITÉ MOTRICE AVEC LE DISPOSITIF DE TRANSMISSION ET MOTOCYCLETTE AVEC L'UNITÉ MOTRICE

(30) Priority: 21.08.2007 JP 2007214314; 08.08.2008 JP 2008204925
(43) Date of publication of application: 10.02.2010
(73) Proprietor: Yamaha Hatsudoki Kabushiki Kaisha, Iwata-shi, Shizuoka 438-8501 (JP)
(72) Inventor: OISHI, Akifumi c/o YAMAHA HATSUDOKI KABUSHIKI KAISHA, Iwata-shi Shizuoka 438-8501 (JP); MURAYAMA, Takuji c/o YAMAHA HATSUDOKI KABUSHIKI KAISHA, Iwata-shi Shizuoka 438-8501 (JP)
(74) Representative: Zimmermann, Tankred Klaus
(86) International application number: PCT/JP2008/064511
(87) International publication number: WO 2009/025215

(56) References cited:
- GB-A- 921 869
- JP-A- 56 142 773
- JP-A- 57 022 448
- JP-U- 50 008 379
- JP-U- 56 090 539
- JP-U- 58 107 927
- JP-U- 63 104 683

## Description

### Technical Field

The present invention relates to a stepped automatic transmission, a power unit provided with the same, and a motorcycle provided with the same.

### Background Art

In recent years, there is increased a demand for motorcycles, in which a stepped automatic transmission of 4-speed or more-speed is used. In motorcycles, a rider inclines a vehicle body to perform a change of direction. Therefore, it is preferred that motorcycles be small in vehicle width. Accordingly, there are demanded stepped automatic transmissions of 4-speed or more-speed being slim in a vehicle width direction.

For example, JP-UM-A-62-23349 discloses a motorcycle using a stepped automatic transmission of 3-speed. In JP-UM-A-62-23349, a plurality of clutches on a stepped automatic transmission are arranged in a longitudinal direction. Thereby, a stepped automatic transmission being relatively narrow in width is realized.

By the way, in motorcycles, in which an output shaft of a transmission and a rear wheel are connected to each other by power transmission means and a vehicle frame and the rear wheel are connected to each other by a rear arm, it is required that the rear arm be lengthened in order to obtain a high kinematical performance.

In order to lengthen a rear arm, the transmission is preferably short in a longitudinal direction. In other words, a distance between an input shaft and an output shaft of a transmission is preferably short. In the stepped automatic transmission disclosed in JP-UM-A-62-23349 however, a rotating shaft is arranged in a longitudinal direction of a vehicle. Therefore, in the stepped automatic transmission disclosed in JP-UM-A-62-23349 a distance between an input shaft and an output shaft of a transmission is relatively long. Accordingly, when the stepped automatic transmission disclosed JP-UM-A-62-23349 is used, it is difficult to lengthen a rear arm to improve a motorcycle in kinematical performance.
GB 921 869 A describes a transmission gearing. In a change speed gear comprising a number of selectable ratio gear-boxes arranged in cascade, the quotient of any pair of adjacent ratios in any gear-box equals the quotient of any pair of adjacent ratios in a preceding gear-box raised to a power equal to the number of ratios in that preceding gear-box. In a two speed gear which may form one of the gear-boxes, a low speed drive from a first shaft passes through gears and an overrunning clutch to a second shaft, and a high speed drive through a clutch, which may be actuated by an electro-hydraulic device and further gears. Four of such gear-boxes may be arranged in cascade and the respective clutches are operated by a binary encoding switch to provide sixteen ratios. To reduce space, the gearing may be contained within one casing, and the shafts lie in different planes.

### Summary of the Invention

The invention has been thought of in view of this and has its object to provide a transmission, which is compact in an axial direction of an input shaft and in which a distance between the input shaft and an output shaft is relatively short.

This object is achieved by a stopped automatic transmission according to claim 1.

According to the invention, it is possible to realize a transmission, which is compact in an axial direction of an input shaft and in which a distance between the input shaft and an output shaft is relatively short.

### Brief Description of the Drawings

Fig. 1 is a left side view showing a moped.
Fig. 2 is a right side view showing a moped.
Fig. 3 is a right side view showing an engine unit.
Fig. 4 is a cross sectional view showing the engine unit.
Fig. 5 is a partial, cross sectional view showing the engine unit.
Fig. 6 is a schematic view illustrating the construction of the engine unit.
Fig. 7 is a partial, cross sectional view showing the engine unit representing the construction of a downstream clutch group.
Fig. 8 is a conceptual view illustrating an oil circuit.
Fig. 9 is a schematic view illustrating a power transmission path at the time of 1-speed in a transmission.
Fig. 10 is a schematic view illustrating a power transmission path at the time of 2-speed in the transmission.
Fig. 11 is a schematic view illustrating a power transmission path at the time of 3-speed in the transmission.
Fig. 12 is a schematic view illustrating a power transmission path at the time of 4-speed in the transmission.
Fig. 13 is a schematic view illustrating the construction of an engine unit in Modification 1.
Fig. 14 is a schematic view illustrating the construction of an engine unit in Modification 2.
Fig. 15 is a schematic view illustrating the construction of an engine unit in Modification 3.
Fig. 16 is a schematic view illustrating the construction of an engine unit in Modification 4.
Fig. 17 is a schematic view illustrating the construction of an engine unit in Modification 5.
Fig. 18 is a schematic view illustrating the construction of an engine unit in Modification 6.

### Description of Reference Numerals and Signs

2: moped (motorcycle)
10: body frame
10a: rear frame portion
18: rear wheel
20: engine unit (power unit)
28: rear arm
30: engine (power source)
31: transmission
32: crank case
33: output shaft
34: crank shaft
52: input shaft
53: first rotating shaft
54: second rotating shaft
55: first clutch
56: inner (input side clutch member)
57: outer (output side clutch member)
58: first gear
59: third clutch
60: inner (output side clutch member)
61: outer (input side clutch member)
62: ninth gear
63: second gear
64: third rotating shaft
65: tenth gear
66: fourth clutch
67: inner (input side clutch member)
68: outer (output side clutch member)
69: eleventh gear
70: second clutch
71: inner (input side clutch member)
72: outer (output side clutch member)
73: seventh gear
74: fifth gear
75: fourth gear
76: twelfth gear
77: eighth gear
78: sixth gear
83: third change gear pair
84: first transmission gear pair
85: second transmission gear pair
86: first change gear pair
87: third gear
88: speed sensor
91: second change gear pair
99: oil reservoir
100: kick starter
115: balancer shaft

### Best Mode for Carrying Out the Invention

An embodiment will be described citing a so-called moped 2 as an example, in which the invention is embodied.

### (Outline construction of moped 2)

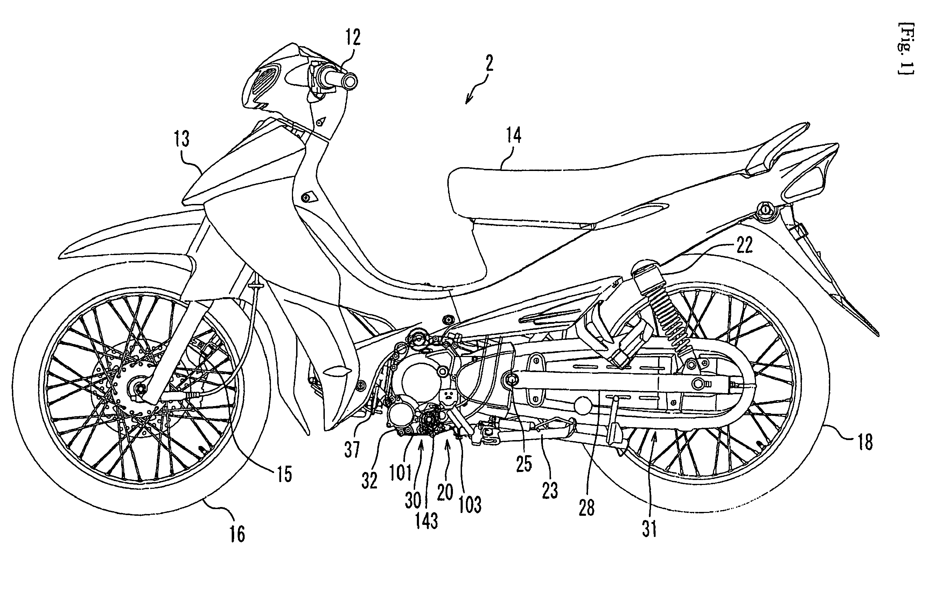

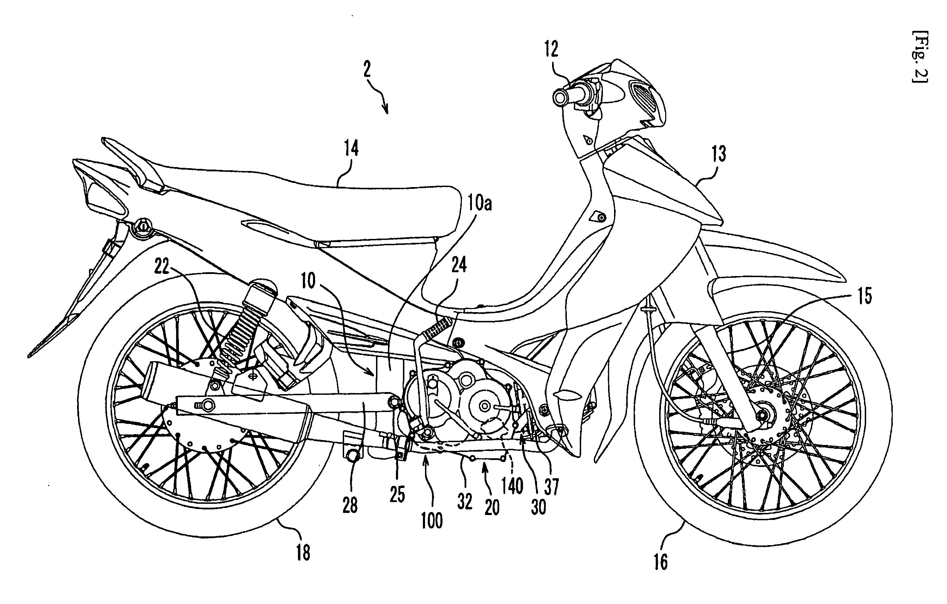

First, an outline construction of the moped 2 will be described with reference to Figs. 1 and 2. In addition, front and rear, and left and right directions in the following descriptions are ones as seen from a rider seated on a seat 14 of the moped 2.

As shown in Fig. 2, the moped 2 comprises a body frame 10. The body frame 10 includes a head pipe (not shown). The head pipe is extended a little obliquely forward and downward on a front portion of a vehicle. A steering shaft (not shown) is inserted rotatably into the head pipe. A handle 12 is provided at an upper end of the steering shaft. On the other hand, a front fork 15 is connected to a lower end of the steering shaft. A front wheel 16 as a driven wheel is mounted rotatably to a lower end of the front fork 15.

A body cover 13 is mounted to the body frame 10. A part of the body frame 10 is covered by the body cover 13. A seat 14, on which a rider is seated, is mounted to the body cover 13. Also, a side stand 23 is mounted to the body frame 10 substantially centrally of a vehicle.

An engine unit 20 is suspended from the body frame 10. In the embodiment, the engine unit 20 is fixed to the body frame 10. That is, the engine unit 20 is a so-called rigid-type engine unit.

The engine unit 20 according to the embodiment is of a relatively longitudinally short type. Specifically, a transmission 31 of the engine unit 20 according to the embodiment is of a type, in which a distance between an input shaft 52 and an output shaft 33 is relatively short. Accordingly, the engine unit 20 according to the embodiment is especially useful for mopeds, off-road vehicles, on-road vehicles, etc., kinematical performance which is required to be relatively higher than that of scooter type vehicles.

As shown in Fig. 2, the body frame 10 comprises a rear frame portion 10a positioned rearwardly of the engine unit 20. A rear arm 28 extending rearward is mounted to the rear frame portion 10a. The rear arm 28 can swing about a pivot shaft 25. A rear wheel 18 as a drive wheel is mounted rotatably to a rear end of the rear arm 28. The rear wheel 18 is connected to an output shaft 33 of the transmission 31 by power transmission means (not shown). Accordingly, the rear wheel 18 is driven by the engine unit 20. Also, one end of a cushion unit 22 is mounted to the rear end of the rear arm 28. The other end of the cushion unit 22 is mounted to the body frame 10. The cushioning unit 22 suppresses swinging of the rear arm 28.

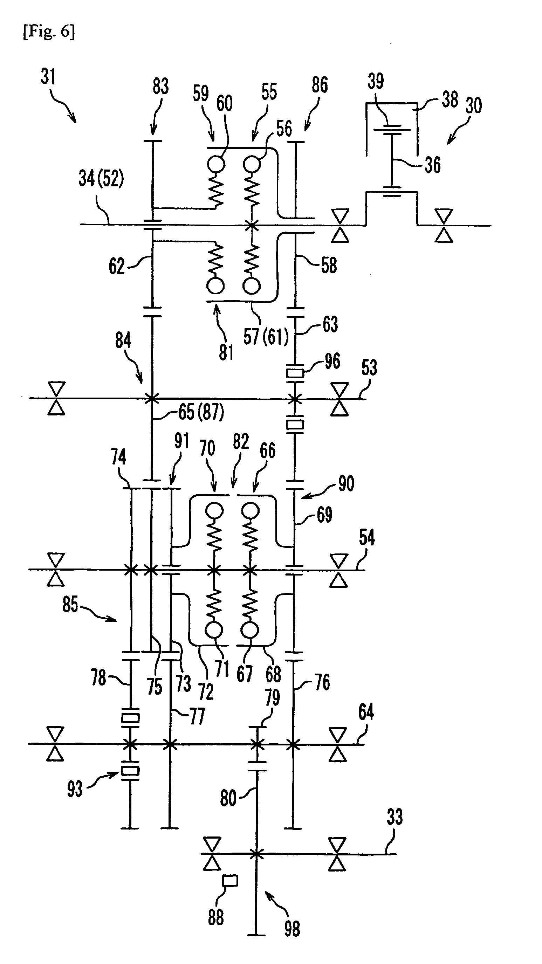

As shown in Fig. 6, according to the embodiment, a speed sensor 88 is provided on the output shaft 33. Specifically, the speed sensor 88 is provided on a fourteenth gear 80, which rotates together with the output shaft 33. However, the speed sensor 88 may be provided on a rotating shaft except the output shaft 33, or may be provided on a further member, which rotates at a predetermined rotating speed ratio relative to the output shaft 33.

### (Construction of engine unit 20)

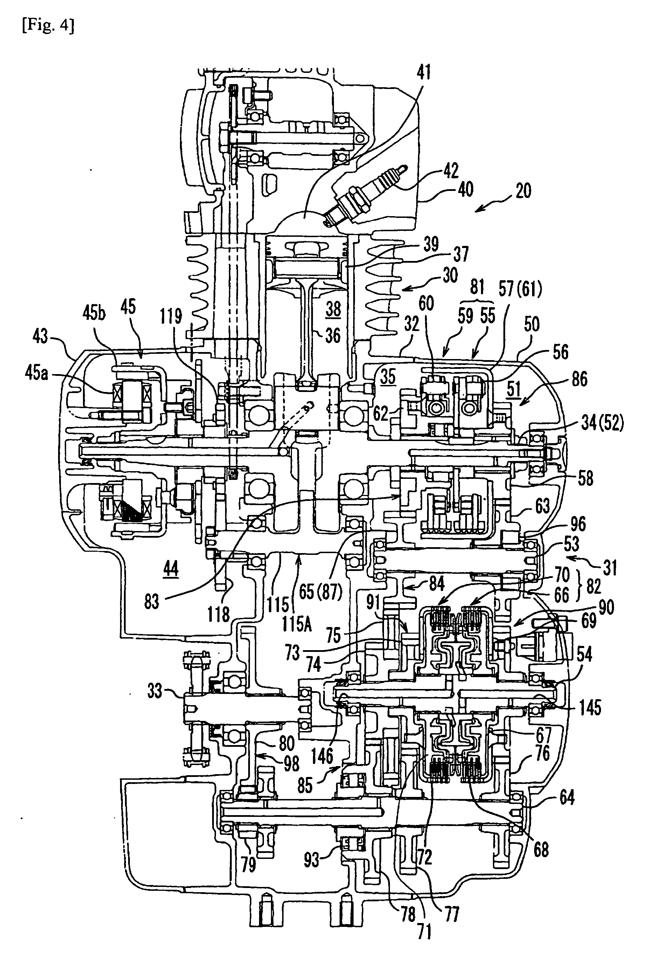

Fig. 4 is a cross sectional view showing the engine unit 20. Fig. 6 is a schematic view illustrating the construction of the engine unit 20 as a power unit. As shown in Fig. 4, the engine unit 20 comprises an engine 30 as a power source and a transmission 31. In addition, the embodiment will be described with respect to an example, in which the engine 30 is a single cylinder engine. However, the engine 30 in the invention is not limited to a single cylinder engine. The engine 30 may be a multi-cylinder engine, for example, a two cylinder engine, or the like.

### - Engine 30 -

The engine 30 comprises a crank case 32, a cylinder body 37, a cylinder head 40, and a crank shaft 34. A crank chamber 35 is compartmented and formed in the crank case 32. A cylinder 38 opened to the crank chamber 35 is compartmented and formed in the cylinder body 37. A cylinder head 40 is mounted to a tip end of the cylinder body 37. The crank shaft 34 extending in a vehicle width direction is arranged in the crank chamber 35. A connecting rod 36 is mounted to the crank shaft 34. A piston 39 arranged in the cylinder 38 is mounted to a tip end of the connecting rod 36. A combustion chamber 41 is compartmented and formed by the piston 39, the cylinder body 37, and the cylinder head 40. An ignition plug 42 is mounted to the cylinder head 40 so that a fire portion at a tip end thereof is positioned in the combustion chamber 41.

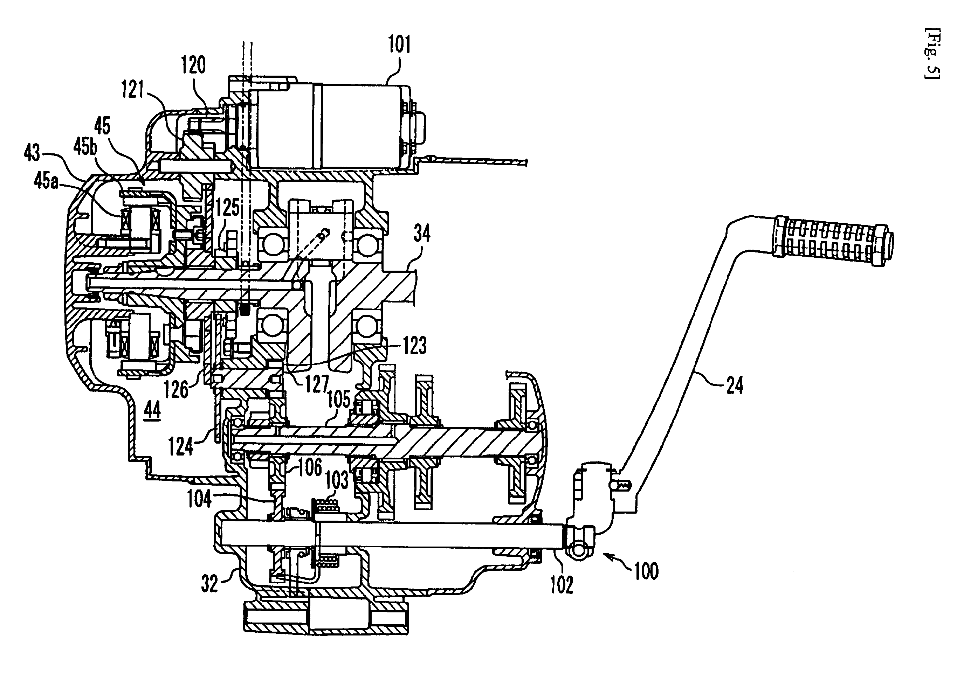

Fig. 5 is a partial, cross sectional view showing the engine unit 20 representative of a kick starter 100 and a sel-motor 101. As shown in Figs. 2 and 5, the engine unit 20 is provided with the kick starter 100. A rider on the moped 2 operates the kick starter 100 to thereby enable starting of the engine 30.

The kick starter 100 includes a kick pedal 24. As shown in Fig. 2, the kick pedal 24 is arranged rearwardly and downwardly of the crank shaft 34 and on the right of the crank case 32. The kick pedal 24 is mounted to a kick shaft 102. A compression spring 103 is provided between the kick shaft 102 and the crank case 32. The compression spring 103 imparts a bias in a direction of reverse rotation to the kick shaft 102 rotated upon the operation by a rider. Also, a gear 104 is provided on the kick shaft 102. On the other hand, a gear 106 is provided rotatably on a shaft 105. The gear 104 meshes with the gear 106. Rotation of the kick shaft 102 is transmitted to the crank shaft 34 through the gear 104, etc. Also, the gear 106 meshes with a gear 123 provided on a shaft 127. Accordingly, rotation of the gear 104 is transmitted to the shaft 127 through the gear 106 and the gear 123. A gear 124 is provided on the shaft 127. The gear 124 meshes with a gear 125 provided on the crank shaft 34. Accordingly, rotation of the shaft 127 is transmitted to the crank shaft 34 through the gear 124 and the gear 125. Accordingly, a rider operates the kick pedal 24 to rotate the crank shaft 34.

Also, the engine 30 is also provided with the sel-motor 101. The sel-motor 101 is mounted to the crank case 32. Rotation of the sel-motor 101 is transmitted to the crank shaft 34 through the gears 120, 121, 126. Thereby, the sel-motor 101 is driven upon the operation by a rider whereby the engine 30 is started.

### - Balancer shaft 115-

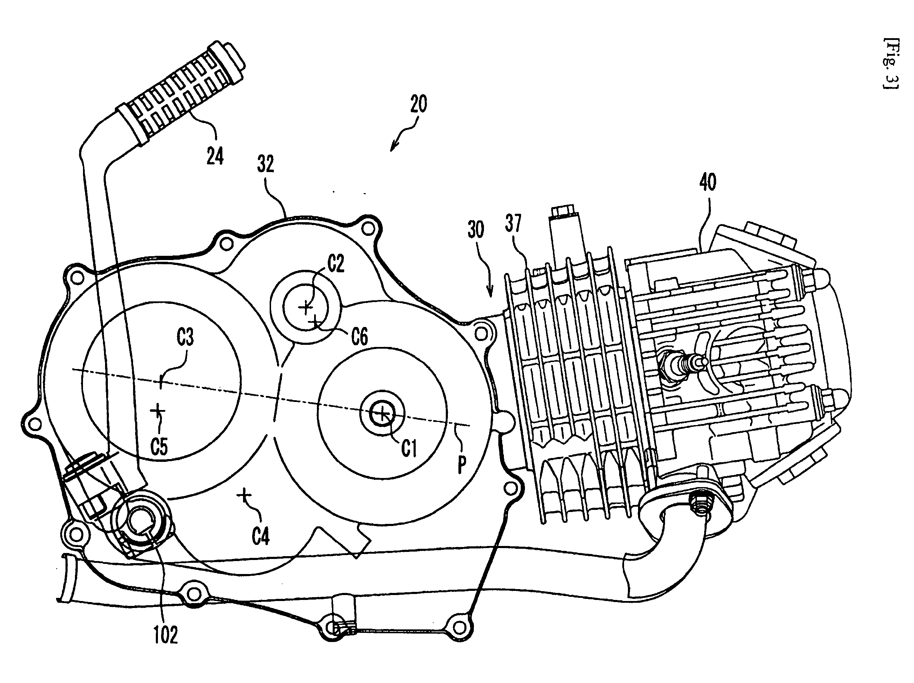

As shown in Fig. 4, a balancer 115A having a balancer shaft 115 is provided on the engine 30. A gear 118 is provided on the balancer shaft 115. The gear 118 meshes with a gear 119 provided on the crank shaft 34. Accordingly, the balancer shaft 115 rotates together with the crank shaft 34. As shown in Figs. 4 and 3, an axis C6 of the balancer shaft 115 is arranged close to an axis C2 of a second rotating shaft 54. As shown in Fig. 4, as viewed in an axial direction of a first rotating shaft 53, at least a part of the first rotating shaft 53, a second gear 63, or a third gear 87 and at least a part of the balancer 115A are arranged so as to overlap each other. Here, in particular, as viewed in an axial direction of the first rotating shaft 53, the balancer shaft 115 is arranged so as to partially overlap the first rotating shaft 53. The balancer shaft 115 is positioned centrally of the crank shaft 34, to which the connecting rod 36 is connected, in the vehicle width direction. On the other hand, the first rotating shaft 53 is positioned on the right in the vehicle width direction. The balancer shaft 115 and the first rotating shaft 53 are made offset in the vehicle width direction. In other words, the balancer shaft 115 and the first rotating shaft 53 are arranged in the vehicle width direction so as not to overlap each other.

### - Generator 45 -

As shown in Figs. 4 and 5, a generator cover 43 is mounted on the left of the crank case 32. A generator chamber 44 is compartmented and formed by the generator cover 43 and the crank case 32.

A left end of the crank shaft 34 projects from the crank chamber 35 to reach the generator chamber 44. In the generator chamber 44, a generator 45 is mounted to the left end of the crank shaft 34. The generator 45 comprises an inner 45a and an outer 45b. The inner 45a is mounted non-rotatably to the crank case 32. On the other hand, the outer 45b is mounted to the left end of the crank shaft 34. The outer 45b rotates together with the crank shaft 34. Accordingly, when the crank shaft 34 rotates, the outer 45b rotates relative to the inner 45a. Thereby, generation of electrical energy is performed.

A transmission cover 50 is mounted on the left of the crank case 32. A transmission chamber 51 positioned on the left of the crank case 32 is compartmented and formed by the transmission cover 50 and the crank case 32.

### - Construction of transmission 31 -

Subsequently, the construction of the transmission 31 will be described in detail mainly with reference to Fig. 6. The transmission 31 is a 4-speed stepped automatic transmission provided with the input shaft 52 and the output shaft 33. The transmission 31 is a so-called gear train type stepped transmission, in which power is transmitted to the output shaft 33 from the input shaft 52 through a plurality of change gear pairs.

A right end of the crank shaft 34 projects from the crank chamber 35 to reach the transmission chamber 51. The crank shaft 34 serves also as the input shaft 52 of the transmission 31.

### - Construction of rotating shaft -

The transmission 31 includes the first rotating shaft 53, the second rotating shaft 54, a third rotating shaft 64, and the output shaft 33. The first rotating shaft 53, the second rotating shaft 54, the third rotating shaft 64, and the output shaft 33, respectively, are arranged in parallel to the input shaft 52.

In Fig. 3, characters C1, C2, C3, C4, C5, respectively, denote an axis of the input shaft 52, an axis of the first rotating shaft 53, an axis of the second rotating shaft 54, an axis of the third rotating shaft 64, and an axis of the output shaft 33. As shown in Fig. 3, axes of rotation of all the input shaft 52, the first rotating shaft 53, the second rotating shaft 54, and the third rotating shaft 64 are arranged adjacent to one another as viewed in side view. In other words, the input shaft 52, the first rotating shaft 53, the second rotating shaft 54, and the third rotating shaft 64 are arranged so that the axis C 1 of the input shaft 52, the axis C2 of the first rotating shaft 53, the axis C3 of the second rotating shaft 54, and the axis C4 of the third rotating shaft 64 constitute a rectangle as viewed in side view.

As shown in Fig. 3, at least one of the axis C2 of the first rotating shaft 53 and the axis C4 of the third rotating shaft 64 is not positioned in a plane P including the axis C1 of the input shaft 52 and the axis C3 of the second rotating shaft 54. Specifically, both the axis C2 of the first rotating shaft 53 and the axis C4 of the third rotating shaft 64 are not positioned in a plane P including the axis C1 of the input shaft 52 and the axis C3 of the second rotating shaft 54. More specifically, while the axis C2 of the first rotating shaft 53 is positioned on one side relative to the plane P, the axis C4 of the third rotating shaft 64 is positioned on the other side relative to the plane P. Specifically, while the axis C2 of the first rotating shaft 53 is positioned above the plane P, the axis C4 of the third rotating shaft 64 is positioned below the plane P. Accordingly, the axis C2 of the first rotating shaft 53 is positioned on a relatively upper side and the third rotating shaft 64 is positioned on a relatively lower side. That is, the third rotating shaft 64 is arranged closer to an oil reservoir 99 than the first rotating shaft 53 is. Specifically, in the embodiment, the first rotating shaft 53 is arranged in a higher position than that of the oil reservoir 99. On the other hand, the third rotating shaft 64 is immersed in the oil reservoir 99.

The axis C4 of the third rotating shaft 64 is positioned forwardly of the axis C3 of the second rotating shaft 54 in a longitudinal direction. More specifically, the axis C4 of the third rotating shaft 64 is positioned between the axis C3 of the second rotating shaft 54 and the axis C1 of the input shaft 52 in the longitudinal direction.

As shown in Fig. 3, the axis C5 of the output shaft 33 is positioned upwardly rearwardly of the axis C4 of the third rotating shaft 64. As viewed in side view, the axis C5 of the output shaft 33 is positioned outside an imaginary rectangle defined by the axis C1 of the input shaft 52, the axis C2 of the first rotating shaft 53, the axis C3 of the second rotating shaft 54, and the axis C4 of the third rotating shaft 64. As viewed in side view, the axis C5 of the output shaft 33 is positioned rearwardly of the axis C3 of the second rotating shaft 54.

In addition, the plane P is extended rearward and upward. That is, the axis C3 of the second rotating shaft 54 is positioned in a higher position than that of the axis C 1 of the input shaft 52.

In addition, the embodiment will be described with respect to an example, in which the output shaft 33 and the third rotating shaft 64, respectively, are provided separately. However, the invention is not limited to the construction. The output shaft 33 and the third rotating shaft 64 may be made common to each other. In other words, the rear wheel 18 may be mounted to the third rotating shaft 64.

### - Upstream clutch group 81 -

As shown in Figs. 4 and 6, an upstream clutch group 81 is provided on the input shaft 52. The upstream clutch group 81 comprises a first clutch 55 and a third clutch 59. The first clutch 55 is arranged rightwardly of the third clutch 59. The first clutch 55 and the third clutch 59, respectively, comprise a centrifugal clutch. Specifically, in the embodiment, the first clutch 55 and the third clutch 59, respectively, comprise a drum centrifugal clutch. However, the invention is not limited to the construction. The first clutch 55 and the third clutch 59 may comprise a clutch other than a centrifugal clutch. For example, the first clutch 55 and the third clutch 59 may comprise a hydraulic clutch. However, the first clutch 55 is preferably a centrifugal clutch.

The first clutch 55 includes an inner 56 as an input side clutch member and an outer 57 as an output side clutch member. The inner 56 is provided non-rotatably relative to the input shaft 52. Therefore, the inner 56 rotates together with rotation of the input shaft 52. On the other hand, the outer 57 is made rotatable relative to the input shaft 52. When the rotating speed of the input shaft 52 becomes larger than a predetermined rotating speed, a centrifugal force acting on the inner 56 brings the inner 56 and the outer 57 into contact with each other. Thereby, the fiirst clutch 55 is connected. On the other hand, when the inner 56 and the outer 57 rotate in a connected state and the rotating speed thereof becomes smaller than the predetermined rotating speed, a centrifugal force acting on the inner 56 decreases, so that the inner 56 and the outer 57 separate from each other. Thereby, the first clutch 55 is disconnected.

The third clutch 59 includes an inner 60 as an output side clutch member and an outer 61 as an input side clutch member. The inner 60 is provided non-rotatably relative to a ninth gear 62 described later. When input shaft 52 rotates, its rotation is transmitted to the inner 60 through a first change gear pair 86, the first rotating shaft 53, and a third change gear pair 83. Therefore, the inner 60 rotates together with rotation of the input shaft 52. The outer 61 is made rotatable relative to the input shaft 52. When the rotating speed of the input shaft 52 becomes larger than a predetermined rotating speed, a centrifugal force acting on the inner 60 brings the inner 60 and the outer 61 into contact with each other. Thereby, the third clutch 59 is connected. On the other hand, when the inner 60 and the outer 61 rotate in a connected state and the rotating speed thereof becomes smaller than the predetermined rotating speed, a centrifugal force acting on the inner 60 decreases, so that the inner 60 and the outer 61 separate from each other. Thereby, the third clutch 59 is disconnected.

In addition, in the embodiment, the outer 57 and the outer 61 are constituted by the same member. However, the invention is not limited to the construction. The outer 57 and the outer 61 may comprise a separate member.

The rotating speed of the input shaft 52 when the first clutch 55 is connected is different from the rotating speed of the input shaft 52 when the third clutch 59 is connected. In other words, the rotating speed of the inner 56 when the first clutch 55 is connected is different from the rotating speed of the inner 60 when the third clutch 59 is connected. Specifically, the rotating speed of the input shaft 52 when the first clutch 55 is connected is lower than the rotating speed of the input shaft 52 when the third clutch 59 is connected. More specifically, the first clutch 55 is connected when the rotating speed of the input shaft 52 is equal to or more than a first rotating speed. On the other hand, the first clutch 55 is put in a disconnected state when the rotating speed of the input shaft 52 is less than the first rotating speed. The third clutch 59 is connected when the rotating speed of the input shaft 52 is equal to or more than a second rotating speed, which is higher than the first rotating speed. On the other hand, the third clutch 59 is put in a disconnected state when the rotating speed of the input shaft 52 is less than the second rotating speed.

A first gear 58 is provided on the outer 57 of the first clutch 55 to be made non-rotatable relative to the outer 57. The first gear 58 rotates together with the outer 57 of the first clutch 55. On the other hand, the second gear 63 is provided on the first rotating shaft 53. The second gear 63 meshes with the first gear 58. The first gear 58 and the second gear 63 constitute a first change gear pair 86. In the embodiment, the first change gear pair 86 constitutes a 1-speed change gear pair.

The second gear 63 is a so-called one-way gear. Specifically, the second gear 63 transmits rotation of the first gear 58 to the first rotating shaft 53. On the other hand, the second gear 63 does not transmit rotation of the first rotating shaft 53 to the input shaft 52. That is, the second gear 63 serves as a one-way rotation transmitting mechanism 96.

A ninth gear 62 is provided on the inner 60 as an output side clutch member of the third clutch 59. The ninth gear 62 rotates together with the inner 60. On the other hand, a tenth gear 65 is provided on the first rotating shaft 53. The tenth gear 65 meshes with the ninth gear 62. The tenth gear 65 and the ninth gear 62 constitute the third change gear pair 83. The third change gear pair 83 has a different gear ratio from that of the first change gear pair 86. Specifically, the third change gear pair 83 has a smaller gear ratio than that of the first change gear pair 86. The third change gear pair 83 constitutes a 2-speed change gear pair.

The first clutch 55 and the third clutch 59 are positioned between the first change gear pair 86 and the third change gear pair 83. In other words, the first clutch 55 and the third clutch 59 are arranged between the first change gear pair 86 and the third change gear pair 83.

In the embodiment, the tenth gear 65 functions also as the third gear 87. In other words, the tenth gear 65 and the third gear 87 are common to each other. A fourth gear 75 is provided non-rotatably on the second rotating shaft 54. The fourth gear 75 rotates together with the second rotating shaft 54. The third gear 87 functioning also as the tenth gear 65 meshes with the fourth gear 75. The third gear 87 functioning also as the tenth gear 65 and the fourth gear 75 constitute a first transmission gear pair 84.

A fifth gear 74 is provided on the second rotating shaft 54 to be non-rotatable relative to the second rotating shaft 54. The fifth gear 74 rotates together with the second rotating shaft 54. On the other hand, a sixth gear 78 is provided on the third rotating shaft 64 to be non-rotatable relative to the third rotating shaft 64. The third rotating shaft 64 rotates together with the sixth gear 78. The fifth gear 74 and the sixth gear 78 mesh with each other. The fifth gear 74 and the sixth gear 78 constitute a second transmission gear pair 85.

The sixth gear 78 is a so-called one-way gear. Specifically, the sixth gear 78 transmits rotation of the second rotating shaft 54 to the third rotating shaft 64. On the other hand, the sixth gear 78 does not transmit rotation of the third rotating shaft 64 to the second rotating shaft 54. That is, the sixth gear 78 serves as a one-way rotation transmitting mechanism 93.

In the invention, however, it is not essential that the sixth gear 78 be a so-called one-way gear. For example, the sixth gear 78 may be an ordinary gear and the fifth gear 74 may be a so-called one-way gear. In other words, the fifth gear 74 may serve as a one-way rotation transmitting mechanism. Specifically, the fifth gear 74 may transmit rotation of the second rotating shaft 54 to the sixth gear 78 but may not transmit rotation of the sixth gear 78 to the second rotating shaft 54.

### - Downstream clutch group 82 -

A downstream clutch group 82 is provided on the second rotating shaft 54. The downstream clutch group 82 is positioned rearwardly of the upstream clutch group 81. As shown in Fig. 4, the downstream clutch group 82 and the upstream clutch group 81 are arranged in positions, in which they overlap at least partially in an axial direction of the input shaft 52. In other words, the downstream clutch group 82 and the upstream clutch group 81 are arranged in positions, in which they overlap at least partially in the vehicle width direction. More specifically, the downstream clutch group 82 and the upstream clutch group 81 are arranged in positions to overlap substantially in the vehicle width direction.

The downstream clutch group 82 comprises a second clutch 70 and a fourth clutch 66. The fourth clutch 66 is arranged on the right of the second clutch 70. Therefore, a direction, in which the first clutch 55 is positioned relative to the third clutch 59, and a direction, in which the fourth clutch 66 is positioned relative to the second clutch 70, are equal to each other. As shown in Fig. 4, the first clutch 55 and the fourth clutch 66 are arranged to overlap at least partially in the vehicle width direction. In other words, the first clutch 55 and the fourth clutch 66 are arranged to overlap at least partially in the axial direction of the input shaft 52. On the other hand, the third clutch 59 and the second clutch 70 are arranged to overlap at least partially in the vehicle width direction. In other words, the third clutch 59 and the second clutch 70 are arranged to overlap at least partially in the axial direction of the input shaft 52. Specifically, the first clutch 55 and the fourth clutch 66 are arranged to overlap substantially in the vehicle width direction. On the other hand, the third clutch 59 and the second clutch 70 are arranged to overlap substantially in the vehicle width direction.

The second clutch 70 and the fourth clutch 66, respectively, comprise a so-called hydraulic clutch. Specifically, in the embodiment, the second clutch 70 and the fourth clutch 66, respectively, comprise a disk type hydraulic clutch. However, the invention is not limited to the construction. The fourth clutch 66 and the second clutch 70 may comprise a clutch other than a hydraulic clutch. For example, the fourth clutch 66 and the second clutch 70 may comprise a centrifugal clutch. However, the fourth clutch 66 and the second clutch 70 preferably comprise a hydraulic clutch.

In this manner, the first clutch 55, the third clutch 59, the fourth clutch 66, and the second clutch 70, respectively, may comprise a drum-type or disk-type centrifugal clutch, or a drum-type or disk-type hydraulic clutch. All of the first clutch 55, the third clutch 59, the fourth clutch 66, and the second clutch 70 may comprise a centrifugal clutch. All of the first clutch 55, the third clutch 59, the fourth clutch 66, and the second clutch 70 may comprise a hydraulic clutch. Also, one or plural clutches having a relatively large gear ratio, out of the first clutch 55, the third clutch 59, the fourth clutch 66, and the second clutch 70 may comprise a centrifugal clutch and a clutch or clutches having a relatively small gear ratio, other than the clutch or clutches, may comprise a hydraulic clutch. Specifically, only the first clutch 55 comprise a centrifugal clutch and the clutches 59, 66, 70 other than the first clutch may comprise a hydraulic clutch. Conversely, one or plural clutches having a relatively large gear ratio, out of the first clutch 55, the third clutch 59, the fourth clutch 66, and the second clutch 70 may comprise a hydraulic clutch and a clutch or clutches having a relatively small gear ratio, other than the clutch or clutches, may comprise a centrifugal clutch.

The rotating speed of the second rotating shaft 54 when the second clutch 70 is connected is different from the rotating speed of the second rotating shaft 54 when the fourth clutch 66 is connected. In other words, the rotating speed of an inner 71 when the second clutch 70 is connected is different from the rotating speed of an inner 67 when the fourth clutch 66 is connected. Specifically, the rotating speed of the second rotating shaft 54 when the second clutch 70 is connected is lower than the rotating speed of the second rotating shaft 54 when the fourth clutch 66 is connected.

The second clutch 70 comprises the inner 71 as an input side clutch member and an outer 72 as an output side clutch member. The inner 71 is provided non-rotatably on the second rotating shaft 54. Therefore, the inner 71 rotates together with rotation of the second rotating shaft 54. On the other hand, the outer 72 is rotatable relative to the second rotating shaft 54. When the second rotating shaft 54 rotates in a state, in which the second clutch 70 is not connected, the inner 71 rotates together with the second rotating shaft 54 but the outer 72 does not rotate together with the second rotating shaft 54. In a state, in which the second clutch 70 is connected, both the inner 71 and the outer 72 rotate together with the second rotating shaft 54.

A seventh gear 73 is mounted to the outer 72 as an output side clutch member of the second clutch 70. The seventh gear 73 rotates together with the outer 72. On the other hand, an eighth gear 77 is provided on the third rotating shaft 64 to be non-rotatable relative to the third rotating shaft 64. The eighth gear 77 rotates together with the third rotating shaft 64. The seventh gear 73 and the eighth gear 77 mesh with each other. Accordingly, rotation of the outer 72 is transmitted to the third rotating shaft 64 through the seventh gear 73 and the eighth gear 77.

The seventh gear 73 and the eighth gear 77 constitute a second change gear pair 91. The second change gear pair 91 has a different gear ratio from the gear ratio of the first change gear pair 86, the gear ratio of the third change gear pair 83, and the gear ratio of a fourth change gear pair 90.

The second change gear pair 91 is positioned relative to the second clutch 70 on the same side as that, on which the third change gear pair 83 is positioned relative to the third clutch 59. Specifically, the second change gear pair 91 is positioned on the left of the second clutch 70. Likewise, the third change gear pair 83 is positioned on the left of the third clutch 59.

Also, the second change gear pair 91 and the third change gear pair 83 are arranged to overlap at least partially in the vehicle width direction. In other words, the second change gear pair 91 and the third change gear pair 83 are arranged to overlap at least partially in the axial direction of the input shaft 52. Specifically, the second change gear pair 91 and the third change gear pair 83 are arranged to overlap substantially in the vehicle width direction.

The fourth clutch 66 comprises the inner 67 as an input side clutch member and an outer 68 as an output side clutch member. The inner 67 is provided non-rotatably on the second rotating shaft 54. Therefore, the inner 67 rotates together with rotation of the second rotating shaft 54. On the other hand, the outer 68 is rotatable relative to the second rotating shaft 54. When the second rotating shaft 54 rotates in a state, in which the fourth clutch 66 is not connected, the inner 67 rotates together with the second rotating shaft 54 but the outer 68 does not rotate together with the second rotating shaft 54. In a state, in which the fourth clutch 66 is connected, both the inner 67 and the outer 68 rotate together with the second rotating shaft 54.

An eleventh gear 69 is mounted to the outer 68 as an output side clutch member of the fourth clutch 66. The eleventh gear 69 rotates together with the outer 68. On the other hand, a twelfth gear 76 is provided on the third rotating shaft 64 to be non-rotatable relative to the third rotating shaft 64. The twelfth gear 76 rotates together with the third rotating shaft 64. The eleventh gear 69 and the twelfth gear 76 mesh with each other. Accordingly, rotation of the outer 68 is transmitted to the third rotating shaft 64 through the eleventh gear 69 and the twelfth gear 76.

The twelfth gear 76 and the eleventh gear 69 constitute a fourth change gear pair 90. The fourth change gear pair 90 has a different gear ratio from the gear ratio of the first change gear pair 86 and the gear ratio of the third change gear pair 83.

The second clutch 70 and the fourth clutch 66 are positioned between the second change gear pair 91 and the fourth change gear pair 90. In other words, the second clutch 70 and the fourth clutch 66 are arranged between the second change gear pair 91 and the fourth change gear pair 90.

The fourth change gear pair 90 is positioned relative to the fourth clutch 66 on the same side as that, on which the first change gear pair 86 is positioned relative to the first clutch 55. Specifically, the fourth change gear pair 90 is positioned on the right of the fourth clutch 66. Likewise, the first change gear pair 86 is positioned on the right of the first clutch 55.

Also, the fourth change gear pair 90 and the first change gear pair 86 are arranged to overlap at least partially in the vehicle width direction. In other words, the fourth change gear pair 90 and the first change gear pair 86 are arranged to overlap at least partially in the axial direction of the input shaft 52. Specifically, the fourth change gear pair 90 and the first change gear pair 86 are arranged to overlap substantially in the vehicle width direction.

A thirteenth gear 79 is provided on the third rotating shaft 64 to be non-rotatable relative to the third rotating shaft 64. The thirteenth gear 79 is positioned on the left of the twelfth gear 76 and the eighth gear 77 in the vehicle width direction. The thirteenth gear 79 rotates together with the third rotating shaft 64. On the other hand, a fourteenth gear 80 is provided on the output shaft 33 to be non-rotatable relative to the output shaft 33. In other words, the fourteenth gear 80 rotates together with the output shaft 33. The fourteenth gear 80 and the thirteenth gear 79 constitute a third transmission gear pair 98. The third transmission gear pair 98 transmits rotation of the third rotating shaft 64 to the output shaft 33.

### - Detailed construction of downstream clutch group 82-

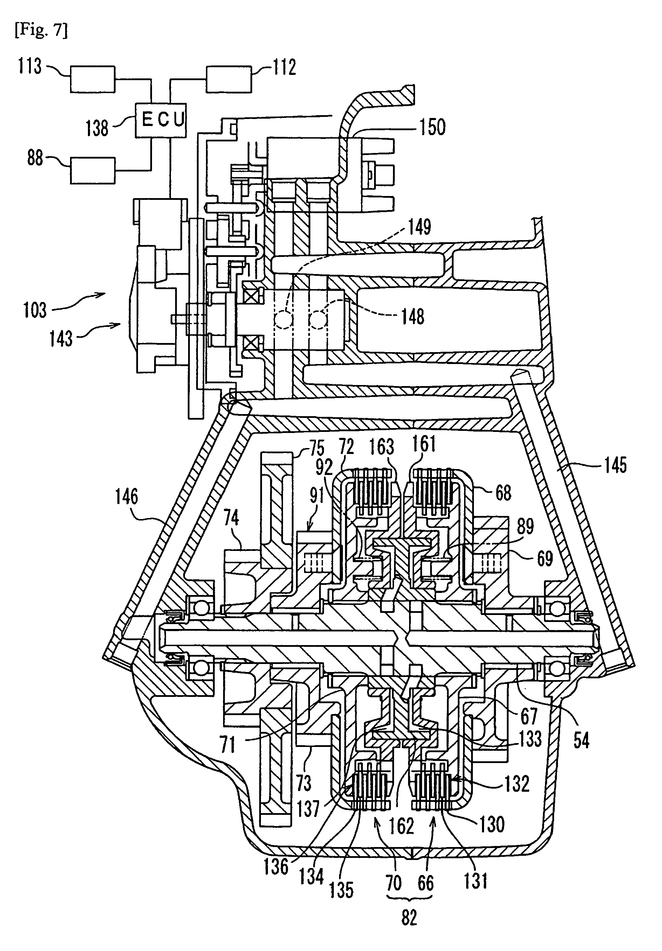

Subsequently, the downstream clutch group 82 will be described in further detail mainly with reference to Fig. 7.

A plate group 136 is provided on the second clutch 70. The plate group 136 comprises a plurality of friction plates 134 and a plurality of clutch plates 135. The plurality of friction plates 134 and the plurality of clutch plates 135 are alternately laminated in the vehicle width direction. The friction plates 134 are non-rotatable relative to the outer 72. On the other hand, the clutch plates 135 are non-rotatable relative to the inner 71.

The inner 71 is rotatable relative to the outer 72. A pressure plate 163 is arranged on an opposite side of the inner 71 to the outer 72 in the vehicle width direction. The pressure plate 163 is biased rightward in the vehicle width direction by a compression coil spring 92. That is, the pressure plate 163 is biased toward a boss portion 162 by the compression coil spring 92.

A working chamber 137 is compartmented and formed between the boss portion 162 and the pressure plate 163. The working chamber 137 is filled with an oil. When hydraulic pressure in the working chamber 137 increases, the pressure plate 163 is displaced in a direction away from the boss portion 162. Thereby, a distance between the pressure plate 163 and the inner 71 decreases. Accordingly, the plate group 136 is put in a state of mutual pressure contact. Consequently, the inner 71 and the outer 72 rotate together to put the second clutch 70 in a connected state.

On the other hand, when hydraulic pressure in the working chamber 137 decreases, the pressure plate 163 is displaced toward the boss portion 162 by the compression coil spring 92. Thereby, the pressure contact state of the plate group 136 is released. Consequently, both the inner 71 and the outer 72 are made relatively rotatable, so that the second clutch 70 is disconnected.

In addition, while depiction is omitted, a minute leak hole communicated to the working chamber 137 is formed on the second clutch 70. Also, no sealing is provided between the inner 71 and the outer 72. Thereby, when the clutch 70 is disconnected, oil in the working chamber 137 can be rapidly discharged. Therefore, according to the embodiment, the clutch 70 can be improved in responsibility. Also, according to the embodiment, oil scattered from the leak hole or a clearance between the inner 71 and the outer 72 can lubricate other sliding locations smoothly.

A plate group 132 is provided on the fourth clutch 66. The plate group 132 comprises a plurality of friction plates 130 and a plurality of clutch plates 131. The plurality of friction plates 130 and the plurality of clutch plates 131 are alternately laminated in the vehicle width direction. The friction plates 130 are non-rotatable relative to the outer 68. On the other hand, the clutch plates 131 are non-rotatable relative to the inner 67.

The inner 67 is rotatable relative to the outer 68 and capable of displacement relative thereto in the vehicle width direction. A pressure plate 161 is arranged on an opposite side of the inner 67 to the outer 68 in the vehicle width direction. The pressure plate 161 is biased leftward in the vehicle width direction by a compression coil spring 89. That is, the pressure plate 161 is biased toward the boss portion 162 by the compression coil spring 89.

A working chamber 133 is compartmented and formed between the boss portion 162 and the pressure plate 161. The working chamber 133 is filled with an oil. When hydraulic pressure in the working chamber 133 increases, the pressure plate 161 is displaced in a direction away from the boss portion 162. Thereby, a distance between the pressure plate 161 and the inner 67 decreases. Accordingly, the plate group 132 is put in a state of mutual pressure contact. Consequently, the inner 67 and the outer 68 rotate together to put the fourth clutch 66 in a connected state.

On the other hand, when hydraulic pressure in the working chamber 133 decreases, the pressure plate 161 is displaced toward the boss portion 162 by the compression coil spring 89. Thereby, the pressure contact state of the plate group 132 is released. Consequently, both the inner 67 and the outer 68 are made relatively rotatable, so that the fourth clutch 66 is disconnected.

In addition, while depiction is omitted, a minute leak hole communicated to the working chamber 133 is formed on the fourth clutch 66. Also, no sealing is provided between the inner 67 and the outer 68. Thereby, when the clutch 66 is disconnected, oil in the working chamber 133 can be rapidly discharged. Therefore, according to the embodiment, the clutch 66 can be improved in responsibility. Also, according to the embodiment, oil scattered from the leak hole or a clearance between the inner 67 and the outer 68 can lubricate other sliding locations smoothly.

### - Oil path 139 -

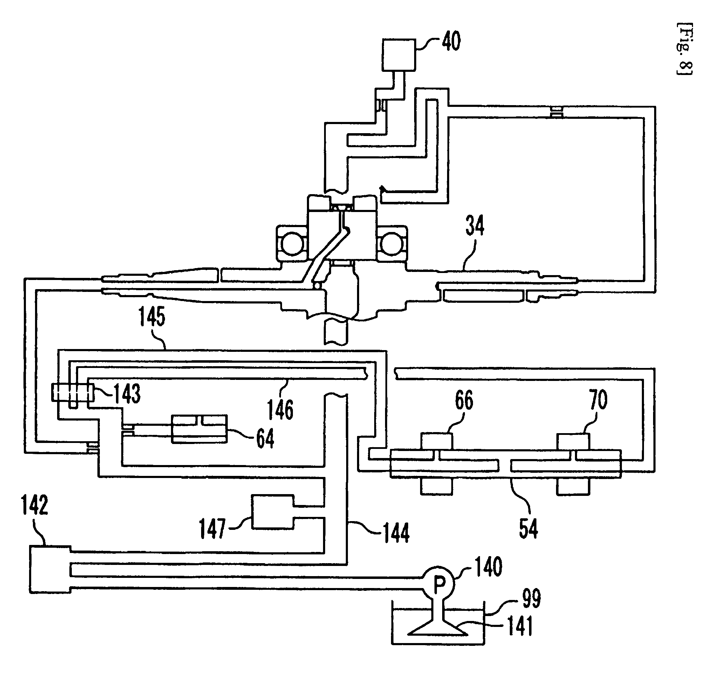

As shown in Fig. 8, pressure in the working chamber 133 of the fourth clutch 66 and pressure in the working chamber 137 of the second clutch 70 are given and adjusted by an oil pump 140. As shown in Fig. 8, an oil reservoir 99 is formed on a bottom of the crank chamber 35. A strainer 141 is immersed in the oil reservoir 99. The strainer 141 is connected to the oil pump 140. The oil pump 140 is driven whereby oil accumulated in the oil reservoir 99 is drawn through the strainer 141.

A relief valve 147 is provided midway through a first oil path 144. Oil as drawn is purified by an oil cleaner 142 and regulated to a predetermined pressure by the relief valve 147. Thereafter, a part of the oil as purified is fed to the crank shaft 34 and sliding portions in the cylinder head 40. Also, a part of the oil as purified is also fed to the working chamber 133 of the fourth clutch 66 and the working chamber 137 of the second clutch 70. Specifically, a second oil path 145 and a third oil path 146 are connected to the first oil path 144 extending from the oil cleaner 142. The second oil path 145 passes on a side of the transmission cover 50 from a valve 143 and extends into the second rotating shaft 54 from a right end of the second rotating shaft 54. The second oil path 145 leads to the working chamber 133. Accordingly, oil is supplied to the working chamber 133 through the second oil path 145 and pressure in the working chamber 133 is regulated. On the other hand, the third oil path 146 passes on a side of the crank case 32 from the valve 143 and extends into the second rotating shaft 54 from a left end of the second rotating shaft 54. The third oil path 146 leads to the working chamber 137. Accordingly, oil is supplied to the working chamber 137 through the third oil path 146.

The valve 143 is provided on connections of the first oil path 144 and the second oil path 145 and the third oil path 146. The valve 143 provides for opening and closing between the first oil path 144 and the third oil path 146 and opening and closing between the first oil path 144 and the second oil path 145.

As shown in Fig. 7, the valve 143 mounts thereto a motor 150, which drives the valve 143. The motor 150 drives the valve 143, thereby making the second clutch 70 and the fourth clutch 66 intermittent. That is, in the embodiment, the oil pump 140, the valve 143, and the motor 150 constitute an actuator 103, which applies hydraulic pressure to the second clutch 70 and the fourth clutch 66, which comprise a hydraulic clutch. The actuator 103 is controlled by an ECU 138 shown in Fig. 7 whereby the second clutch 70 and the fourth clutch 66 are regulated in hydraulic pressure. Specifically, the working chamber 133 and the working chamber 137 is regulated in hydraulic pressure. Thereby, the second clutch 70 and the fourth clutch 66 are made intermittent.

More specifically, as shown in Fig. 7, a throttle opening degree sensor 112 and the speed sensor 88 are connected to the ECU 138. The ECU 138 as a control unit controls the actuator 103 on the basis of at least one of a throttle opening degree detected by the throttle opening degree sensor 112 and a vehicle speed detected by the speed sensor 88. According to the embodiment, the ECU 138 as a control unit controls the actuator 103 on the basis of both a throttle opening degree detected by the throttle opening degree sensor 112 and a vehicle speed detected by the speed sensor 88. Specifically, the ECU 138 controls the actuator 103 on the basis of information obtained by applying a throttle opening degree output from the throttle opening degree sensor 112 and a vehicle speed output from the speed sensor 88 to a V-N diagram read from a memory 113.

Specifically, the valve 143 is formed to be substantially columnar-shaped. Formed on the valve 143 are an inner path 148 for opening of the first oil path 144 and the second oil path 145 and an inner path 149 for opening of the first oil path 144 and the third oil path 146. When the motor 150 rotates the valve 143, any one of a position, in which the first oil path 144 and the second oil path 145 are opened while the first oil path 144 and the third oil path 146 are cut off, a position, in which the first oil path 144 and the third oil path 146 are opened while the first oil path 144 and the second oil path 145 are cut off, and a position, in which the first oil path 144 and the third oil path 146 are cut off and the first oil path 144 and the second oil path 145 are cut off, is selected by the inner paths 148, 149. Thereby, any one of a state, in which both the fourth clutch 66 and the second clutch 70 are disconnected, a state, in which the fourth clutch 66 is connected but the second clutch 70 is disconnected, or a state, in which the fourth clutch 66 is disconnected but the second clutch 70 is connected, is selected.

### - Operation of transmission 31 -

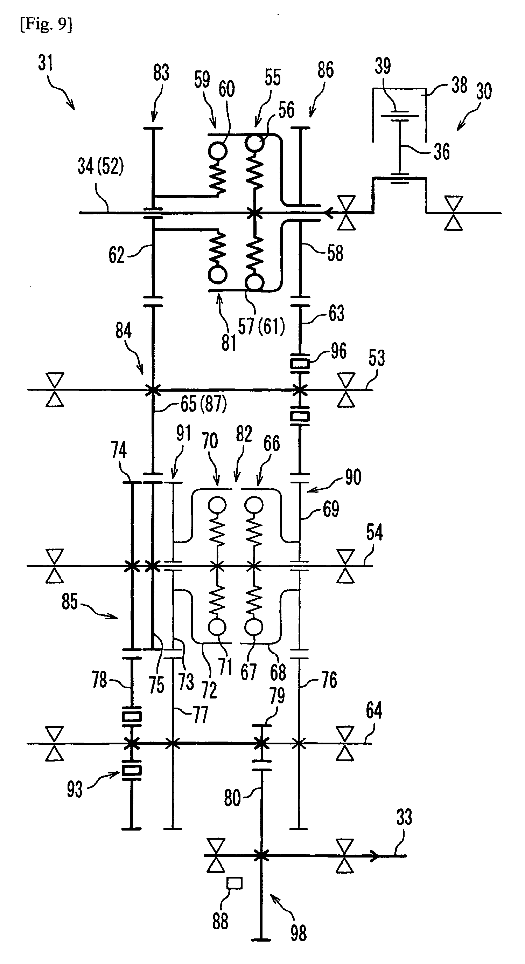

Subsequently, an operation of the transmission 31 will be described in detail with reference to Figs. 9 to 12.

### - Starting, 1-speed -

First, when the engine 30 is started, rotation of the crank shaft 34 (=input shaft 52) begins. The inner 56 of the first clutch 55 rotates together with the input shaft 52. Therefore, when the rotating speed of the input shaft 52 becomes equal to or more than a predetermined rotating speed (=first rotating speed) and a centrifugal force having a predetermined magnitude or more acts on the inner 56, the first clutch 55 is connected as shown in Fig. 9. When the first clutch 55 is connected, the first change gear pair 86 rotates together with the outer 57 of the first clutch 55. Thereby, rotation of the input shaft 52 is transmitted to the first rotating shaft 53.

The third gear 87 rotates together with the first rotating shaft 53. Therefore, as the first rotating shaft 53 rotates, the first transmission gear pair 84 also rotates. Accordingly, rotation of the first rotating shaft 53 is transmitted to the second rotating shaft 54 through the first transmission gear pair 84.

The fifth gear 74 rotates together with the second rotating shaft 54. Therefore, as the second rotating shaft 54 rotates, the second transmission gear pair 85 also rotates. Accordingly, rotation of the second rotating shaft 54 is transmitted to the third rotating shaft 64 through the second transmission gear pair 85.

The thirteenth gear 79 rotates together with the third rotating shaft 64. Therefore, as the third rotating shaft 64 rotates, the third transmission gear pair 98 also rotates. Accordingly, rotation of the third rotating shaft 64 is transmitted to the output shaft 33 through the third transmission gear pair 98.

In this manner, when the moped 2 starts, that is, at the time of 1-speed, rotation is transmitted to the output shaft 33 from the input shaft 52 through the first clutch 55, the first change gear pair 86, the first transmission gear pair 84, the second transmission gear pair 85, and the third transmission gear pair 98 as shown in Fig. 9.

### - 2-speed -

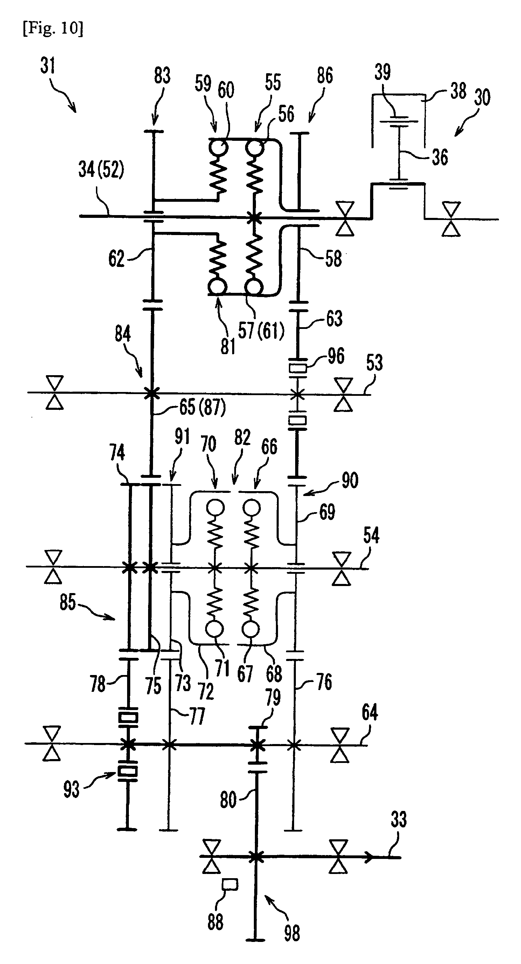

At the time of 1-speed, the tenth gear 65 common to the third gear 87 rotates together with the first rotating shaft 53. Therefore, both the ninth gear 62 meshing with the tenth gear 65 and the inner 60 of the third clutch 59 rotate. Accordingly, when the rotating speed of the input shaft 52 increases, the rotating speed of the inner 60 of the third clutch 59 also increases. When the rotating speed of the input shaft 52 becomes equal to or more than the second rotating speed, which is larger than the first rotating speed, the rotating speed of the inner 60 also increases correspondingly, so that the third clutch 59 is connected as shown in Fig. 10.

Here, in the embodiment, the gear ratio of the third change gear pair 83 is smaller than the gear ratio of the first change gear pair 86. Accordingly, the rotating speed of the tenth gear 65 becomes larger than the rotating speed of the second gear 63. Therefore, rotation is transmitted to the first rotating shaft 53 from the input shaft 52 through the third change gear pair 83. On the other hand, rotation of the first rotating shaft 53 is not transmitted to the input shaft 52 by a one-way rotation transmitting mechanism 96.

Torque is transmitted to the output shaft 33 from the first rotating shaft 53 through the first transmission gear pair 84, the second transmission gear pair 85, and the third transmission gear pair 98 in the same manner as at the time of 1-speed.

In this manner, at the time of 2-speed, rotation is transmitted to the output shaft 33 from the input shaft 52 through the third clutch 59, the third change gear pair 83, the first transmission gear pair 84, the second transmission gear pair 85, and the third transmission gear pair 98 as shown in Fig. 10.

### - 3-speed -

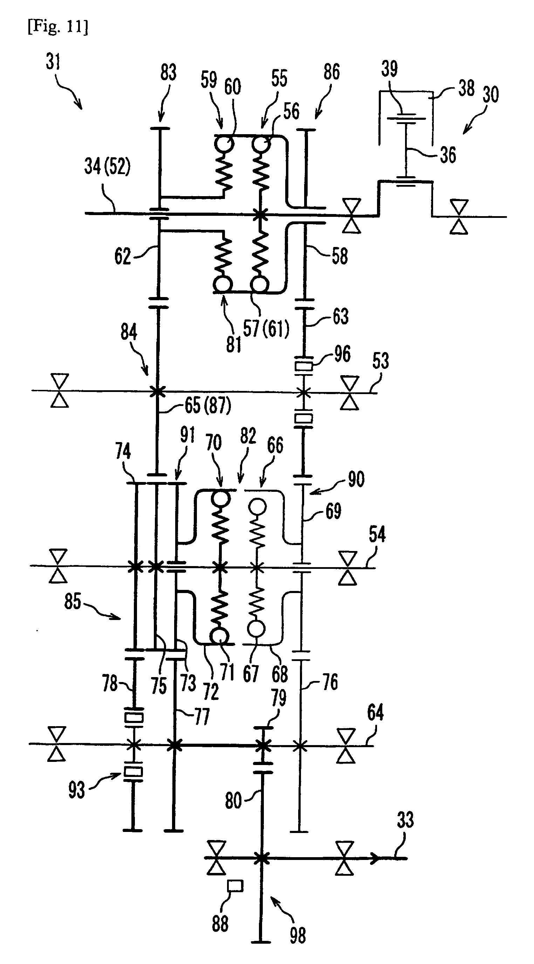

At the time of 2-speed, when the rotating speed of the crank shaft 34 (=the input shaft 52) becomes larger than the second rotating speed and a vehicle speed becomes equal to or more than a predetermined vehicle speed, the valve 143 is driven and the second clutch 70 is connected as shown in Fig. 11. Therefore, rotation of the second change gear pair 91 begins. Here, the gear ratio of the second change gear pair 91 is smaller than the gear ratio of the second transmission gear pair 85. Therefore, the rotating speed of the eighth gear 77 of the second change gear pair 91 becomes larger than the rotating speed of the sixth gear 78 of the third change gear pair 83. Therefore, rotation of the second rotating shaft 54 is transmitted to the third rotating shaft 64 through the second change gear pair 91. On the other hand, rotation of the third rotating shaft 64 is not transmitted to the second rotating shaft 54 by a one-way rotation transmitting mechanism 93.

Rotation of the third rotating shaft 64 is transmitted to the output shaft 33 through the third transmission gear pair 98 in the same manner as at the time of 1-speed and at the time of 2-time.

In this manner, at the time of 3-speed, rotation is transmitted to the output shaft 33 from the input shaft 52 through the third clutch 59, the third change gear pair 83, the first transmission gear pair 84, the second clutch 70, the second change gear pair 91, and the third transmission gear pair 98 as shown in Fig. 11.

### - 4-speed -

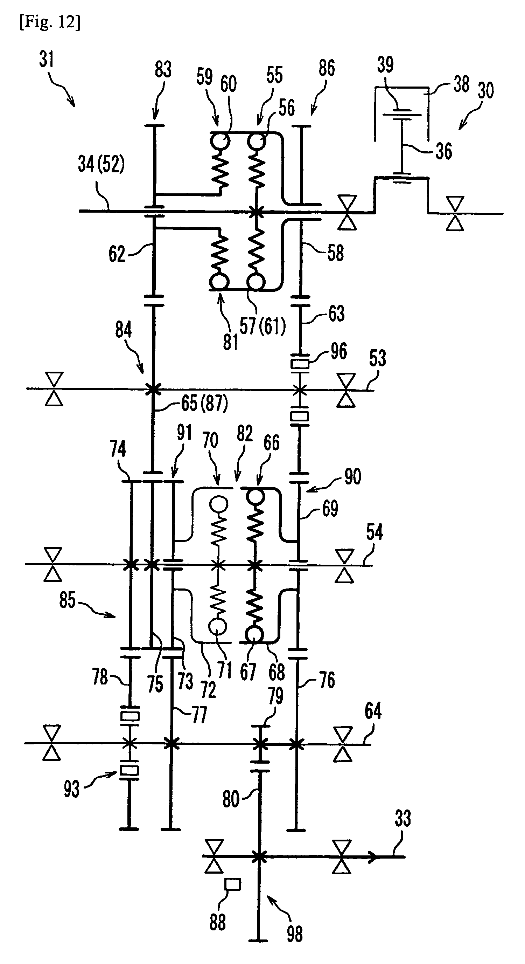

At the time of 3-speed, when the rotating speed of the crank shaft 34 (=the input shaft 52) increases further and a vehicle speed increases further, the valve 143 is driven and the fourth clutch 66 is connected as shown in Fig. 12. On the other hand, the second clutch 70 is disconnected. Therefore, rotation of the fourth change gear pair 90 begins. Here, the gear ratio of the fourth change gear pair 90 is also smaller than the gear ratio of the second transmission gear pair 85. Therefore, the rotating speed of the twelfth gear 76 of the fourth change gear pair 90 becomes larger than the rotating speed of the sixth gear 78 of the second transmission gear pair 85. Therefore, rotation of the second rotating shaft 54 is transmitted to the third rotating shaft 64 through the fourth change gear pair 90. On the other hand, rotation of the third rotating shaft 64 is not transmitted to the second rotating shaft 54 by the one-way rotation transmitting mechanism 93.

Rotation of the third rotating shaft 64 is transmitted to the output shaft 33 through the third transmission gear pair 98 in the same manner as at the time of 1-speed, at the time of 2-time, and at the time of 3-time.

In this manner, at the time of 4-speed, rotation is transmitted to the output shaft 33 from the input shaft 52 through the third clutch 59, the third change gear pair 83, the first transmission gear pair 84, the fourth clutch 66, the fourth change gear pair 90, and the third transmission gear pair 98 as shown in Fig. 12.

As described above, the embodiment adopts a so-called gear train type transmission 31. Therefore, energy transmission loss is small as compared with, for example, a continuously variable transmission, in which a V-belt is used. Consequently, it is possible to improve a vehicle in fuel consumption.

In the embodiment, the input shaft 52, the first rotating shaft 53, the second rotating shaft 54, the third rotating shaft 64, and the output shaft 33 are arranged in a direction perpendicular to the axial direction of the input shaft 52. That is, the input shaft 52, the first rotating shaft 53, the second rotating shaft 54, the third rotating shaft 64, and the output shaft 33 are arranged to overlap in a direction perpendicular to the axial direction of the input shaft 52. The input shaft 52, the first rotating shaft 53, the second rotating shaft 54, the third rotating shaft 64, and the output shaft 33 are arranged to overlap in a direction perpendicular to the axial direction of the input shaft 52. Therefore, it is possible to make the transmission 31 compact in the axial direction of the input shaft 52. Consequently, it is possible to restrict the width of the moped 2 in the vehicle width direction. Accordingly, a bank angle of the moped 2 can be made relatively large.

Also, in the embodiment, at least one of the axis C2 of the first rotating shaft 53 and the axis C4 of the third rotating shaft 64 is not positioned in a plane P including the axis C 1 of the input shaft 52 and the axis C3 of the second rotating shaft 54. In this manner, by arranging the input shaft 52, the first rotating shaft 53, the second rotating shaft 54, and the third rotating shaft 64, a distance between the input shaft 52 and the output shaft 33 can be made relatively short. Accordingly, it is possible to arrange the output shaft 33 relatively toward the front of a vehicle. Accordingly, it is possible to make the rear arm 28 relatively long. Consequently, it is possible to improve the moped 2 in kinematical performance.

With a view to further lengthening the rear arm 28, the second rotating shaft 54 is preferably arranged so that the axis C3 of the second rotating shaft 54 is positioned to be higher or lower than the axis C1 of the input shaft 52. That is, the input shaft 52 and the second rotating shaft 54 are preferably arranged so that the plane P is inclined to the horizontal. Specifically, the input shaft 52 and the second rotating shaft 54 are preferably arranged so that the plane P becomes rearwardly upward or rearwardly downward. By doing so, a distance between the input shaft 52 and the output shaft 33 can be made further short in a longitudinal direction. Accordingly, it is possible to further lengthen the rear arm 28.

With a view to further shortening a distance between the input shaft 52 and the output shaft 33, both the axis C2 of the first rotating shaft 53 and the axis C4 of the third rotating shaft 64 are preferably arranged in other locations than the plane P including the axis C 1 of the input shaft 52 and the axis C3 of the second rotating shaft 54 as in the embodiment. The first rotating shaft 53 and the third rotating shaft 64 are especially preferably arranged so that the axis C2 of the first rotating shaft 53 is positioned on one side of the plane P and the axis C4 of the third rotating shaft 64 is positioned on the other side of the plane P. Also, in this case, the input shaft 52, the first rotating shaft 53, the second rotating shaft 54, and the third rotating shaft 64 adjoin one another. Accordingly, a distance between the input shaft 52 and the first rotating shaft 53, a distance between the first rotating shaft 53 and the second rotating shaft 54, and a distance between the second rotating shaft 54 and the third rotating shaft 64, respectively, can be made relatively short. Accordingly, there is no need to separately provide a chain or the like for power transmission between the rotating shafts. Further, there is no need for separate parts such as chain tensioners, chain guides as in case of providing a chain. Therefore, it is possible to make the transmission 31 simple in construction. Also, gears for formation of transmission gear pairs can be made relatively small. Therefore, it is possible to make the transmission 31 light and compact.

Also, with a view to further shortening a longitudinal length of the whole of the engine unit 20, the third rotating shaft 64 relatively close to the output shaft 33 in a longitudinal direction is preferably arranged forwardly of the second rotating shaft 54 disposed relatively away from the output shaft 33.

In the embodiment, the axis C2 of the first rotating shaft 53 is positioned above the plane P while the axis C4 of the third rotating shaft 64 is positioned below the plane P. Therefore, the first rotating shaft 53, which rotates at a relatively high speed, is arranged in a position relatively distant from the oil reservoir 99 while the third rotating shaft 64, which rotates at a relatively low speed, is arranged in a position relatively close to the oil reservoir 99. In this manner, by arranging the first rotating shaft 53, which rotates at a relatively high speed, in a position distant from the oil reservoir 99, it is possible to inhibit oil in the oil reservoir 99 from being agitated or rippled by rotation of the first rotating shaft 53. Also, as in the embodiment, in the case where the first rotating shaft 53 or the third rotating shaft 64 is immersed in the oil reservoir 99, agitation of oil in the oil reservoir 99 can be suppressed and an increase in resistance to rotation of the rotating shaft can be reduced by arranging the third rotating shaft 64, which rotates at a relatively low speed, in the oil reservoir.

In contrast, in the case where the first rotating shaft 53 is immersed in the oil reservoir 99 and the third rotating shaft 64 is arranged in a higher position than the oil reservoir 99, a distance between the input shaft 52 and the output shaft 33 can be made relatively short but the first rotating shaft 53, which rotates at a relatively high speed, agitates oil in the oil reservoir 99 violently and generates a relatively large resistance to rotation of the first rotating shaft 53. Consequently, the transmission 31 will be decreased in efficiency of power transmission.

That is, by positioning the axis C2 of the first rotating shaft 53 above the plane P and positioning the axis C4 of the third rotating shaft 64 below the plane P, a distance between the input shaft 52 and the second rotating shaft 54 can be made relatively short. Also, a rotating shaft arranged in the vicinity of the oil reservoir 99 is preferably as small as possible in rotating speed. This is because resistance to agitation of oil, or the like becomes small. Here, the third rotating shaft 64 is a portion, which is reduced in speed relative to the first rotating shaft 53. Therefore, as described above, by positioning the axis C4 of the third rotating shaft 64 below the plane P, it is possible to suppress agitation of oil in the oil reservoir 99 and an increase in resistance to rotation of a rotating shaft (that is, the third rotating shaft 64).

That technology, in which four rotating shafts are provided and a so-called gear train type is adopted, as described in the embodiment is effective for a transmission of 2-speed or more-speed. Further, the technology is effective for a transmission of 3-speed or more-speed, in particular, a transmission of 4-speed or more-speed. The reason for this is that since necessary change gear pairs and clutches are especially many in a transmission of 3-speed, a transmission of 4-speed or more-speed, a whole distance of the engine unit 20 tends to become relatively long.

In the embodiment, as viewed in side view, the first rotating shaft 53, the second gear 63, or at least a part of the third gear 87 and at least a part of the balancer 115A are arranged so as to overlap each other. Thereby, it is possible to make the transmission 31 slimmer.

### «Modification 1»

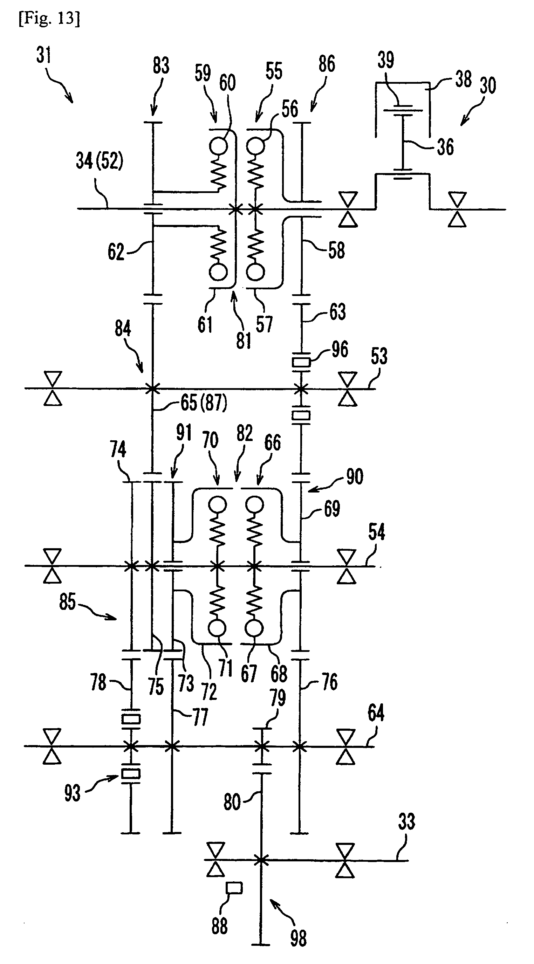

The embodiment has been described with respect to an example, in which the outer 57 of the first clutch 55 and the outer 61 of the third clutch 59 are constituted by the same member. However, the invention is not limited to such construction. For example, as shown in Fig. 13, the outer 57 of the first clutch 55 and the outer 61 of the third clutch 59 may be provided separately.

### «Modification 2»

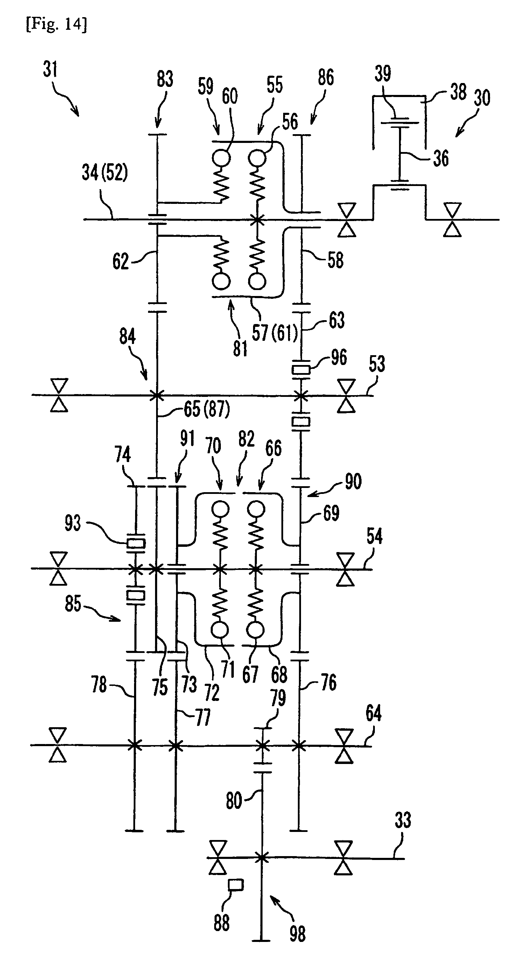

The embodiment has been described with respect to an example, in which the one-way rotation transmitting mechanism 93 is arranged for the sixth gear 78. However, the invention is not limited to such construction. For example, as shown in Fig. 14, the one-way rotation transmitting mechanism 93 may be arranged for the fifth gear 74.

### «Modification 3»

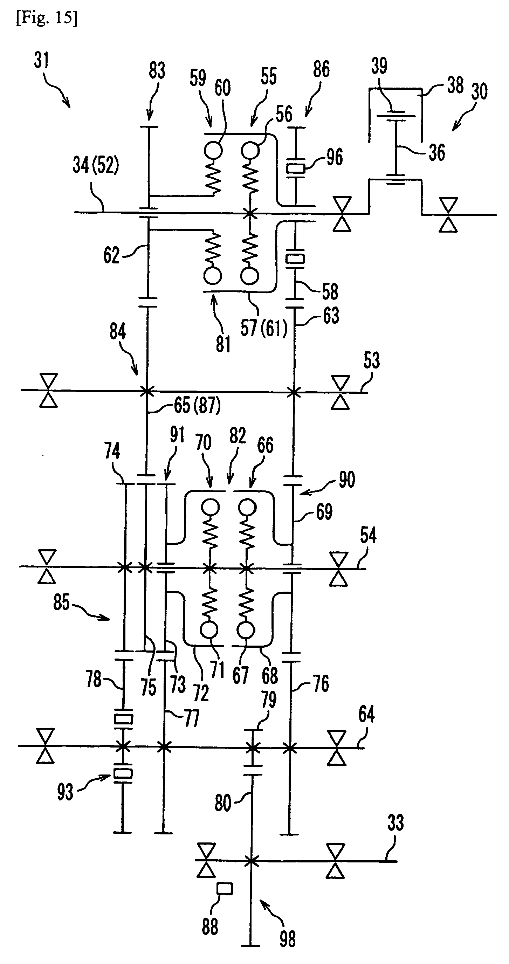

The embodiment has been described with respect to an example, in which the one-way rotation transmitting mechanism 96 is arranged for the second gear 63. However, the invention is not limited to such construction. For example, as shown in Fig. 15, the one-way rotation transmitting mechanism 96 may be arranged for the first gear 58.

### «Modification 4»

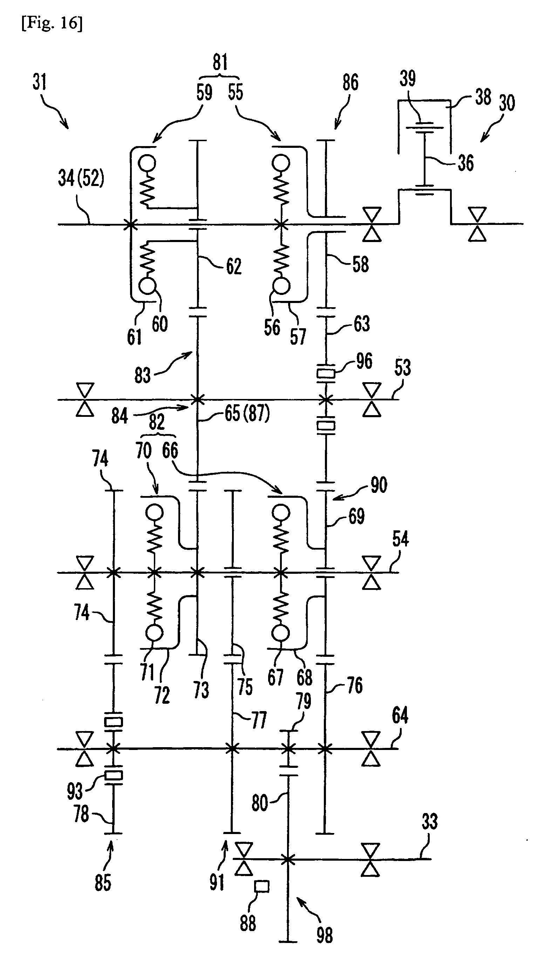

The embodiment has been described with respect to an example, in which the first clutch 55 and the third clutch 59 are arranged between the first change gear pair 86 and the third change gear pair 83. However, the invention is not limited to such construction. For example, as shown in Fig. 16, the first clutch 55 may be arranged on the left of the first change gear pair 86 and the third clutch 59 may also be arranged on the left of the third change gear pair 83.

Likewise, the embodiment has been described with respect to an example, in which the second clutch 70 and the fourth clutch 66 are positioned between the second change gear pair 91 and the fourth change gear pair 90. However, the invention is not limited to such construction. For example, as shown in Fig. 16, the second clutch 70 may be arranged on the left of the second change gear pair 91 and the fourth clutch 66 may also be arranged on the left of the fourth change gear pair 90.

Even in the case shown in Fig. 16, the transmission 31 being relatively small in width can be realized since the input shaft 52, the first rotating shaft 53, the second rotating shaft 54, the third rotating shaft 64, the output shaft 33 are arranged in a longitudinal direction.

### «Modification 5»

The embodiment has been described citing the transmission 31 of 4-speed as an example having a preferred configuration, in which the invention is embodied. However, the invention is not limited to such construction. For example, the transmission 31 may be of 5-speed or more-speed. In this case, it is conceivable to provide two further rotating shafts between the third rotating shaft 64 and the output shaft 33 and to provide a further clutch and a further change gear pair on the two shafts.

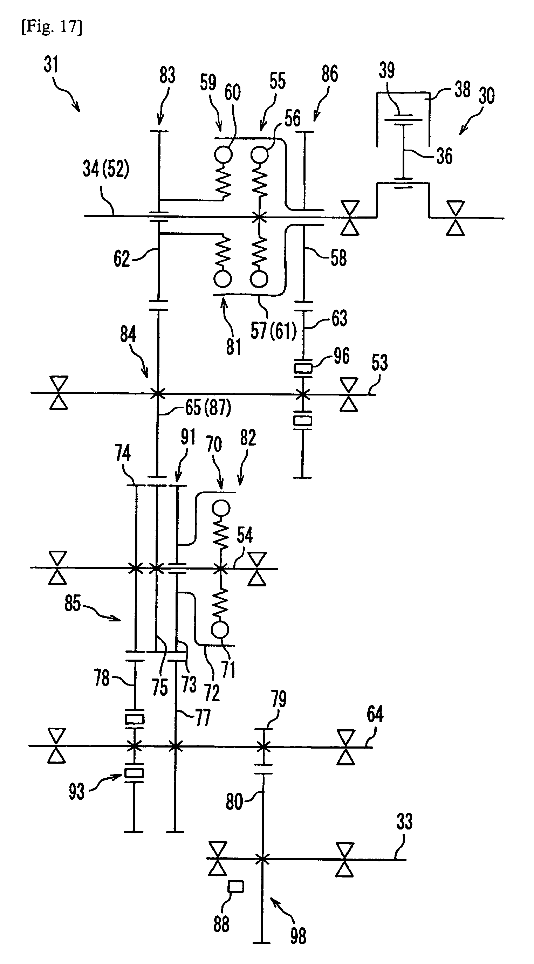

Also, for example, the transmission 31 may be one of 3-speed as shown in Fig. 17. Specifically, in case of constructing a transmission of 3-speed, a construction, in which the fourth clutch 66 and the second change gear pair 91 of the transmission 31, a construction of which is shown in Fig. 6, are not provided as shown in Fig. 17, is conceivable.

### «Modification 6»

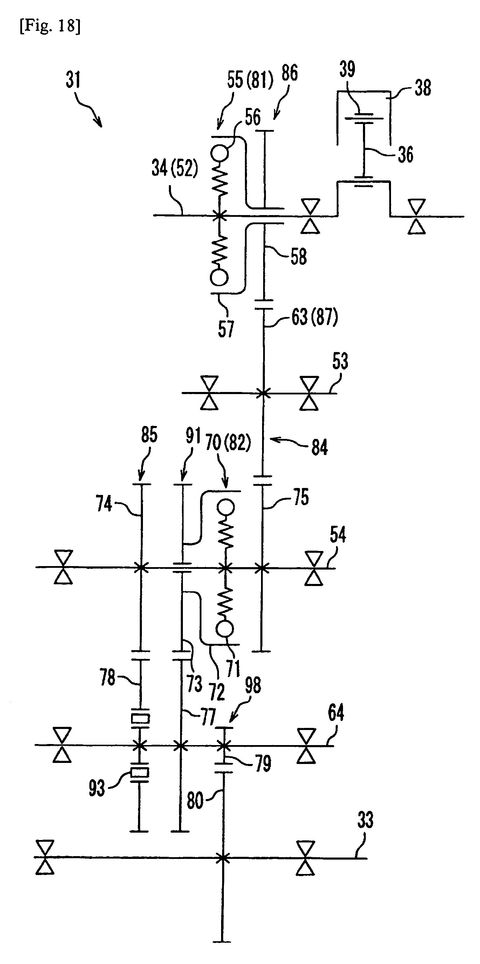

Also, for example, the transmission 31 may be one of 2-speed as shown in Fig. 18. Specifically, in case of constructing a transmission of 2-speed, a construction, in which the third clutch 59, the fourth change gear pair 90, the one-way rotation transmitting mechanism 96, the fourth clutch 66, and the second change gear pair 91 of the transmission 31, a construction of which is shown in Fig. 6, are not provided as shown in Fig. 18, is conceivable.

### «Other modification»

The embodiment has been described with respect to an example, in which the engine 30 is a single cylinder engine. However, in the invention, the engine 30 is not limited to a single cylinder engine. The engine 30 may be a multi-cylinder engine such as two cylinder engine.

The embodiment has been described with respect to an example, in which the output shaft 33 and the third rotating shaft 64 are provided separately. However, the invention is not limited to the construction. The output shaft 33 and the third rotating shaft 64 may be made common to each other. In other words, the rear wheel 18 may be mounted to the third rotating shaft 64.

In the embodiment, the first clutch 55 and the third clutch 59, respectively, comprise a drum type centrifugal clutch. However, the invention is not limited to the construction. The first clutch 55 and the third clutch 59 may comprise a clutch other than a centrifugal clutch. For example, the first clutch 55 and the third clutch 59 may comprise a hydraulic clutch.

The embodiment has been described with respect to an example, in which the first clutch 55 and the third clutch 59, respectively, comprise a disk-type hydraulic clutch. However, the invention is not limited to the construction. The fourth clutch 66 and the second clutch 70 may comprise a clutch other than a hydraulic clutch. For example, the fourth clutch 66 and the second clutch 70 may comprise a centrifugal clutch. However, the fourth clutch 66 and the second clutch 70 preferably comprise a hydraulic clutch.

In this manner, the first clutch 55, the third clutch 59, the fourth clutch 66, and the second clutch 70, respectively, may comprise a drum-type or disk-type centrifugal clutch, or a drum-type or disk-type hydraulic clutch. All of the first clutch 55, the third clutch 59, the fourth clutch 66, and the second clutch 70 may comprise a centrifugal clutch. All of the first clutch 55, the third clutch 59, the fourth clutch 66, and the second clutch 70 may comprise a hydraulic clutch. Also, one or plural clutches having a relatively large gear ratio, out of the first clutch 55, the third clutch 59, the fourth clutch 66, and the second clutch 70 may comprise a centrifugal clutch and a clutch or clutches having a relatively small gear ratio, other than the clutch or clutches, may comprise a hydraulic clutch. Specifically, only the first clutch 55 comprise a centrifugal clutch and the clutches 59, 66, 70 other than the first clutch may comprise a hydraulic clutch. Conversely, one or plural clutches having a relatively large gear ratio, out of the first clutch 55, the third clutch 59, the fourth clutch 66, and the second clutch 70 may comprise a hydraulic clutch and a clutch or clutches having a relatively small gear ratio, other than the clutch or clutches, may comprise a centrifugal clutch.

In addition, the embodiment and the respective modifications have been described with respect to an example, in which gear pairs mesh directly with one another. However, the invention is not limited to the construction. The gear pairs may mesh indirectly with one another through a gear or gears provided separately.

The embodiment has been described with respect to an example, in which the first rotating shaft 53 is arranged so that the axis C2 of the first rotating shaft 53 is positioned to be higher than the axis C4 of the third rotating shaft 64. However, the invention is not limited to the construction. For example, the first rotating shaft 53 may be arranged so that the axis C2 of the first rotating shaft 53 is positioned to be lower than the axis C4 of the third rotating shaft 64. Specifically, the first rotating shaft 53 may be arranged so that the axis C2 of the first rotating shaft 53 is positioned below the plane P. The third rotating shaft 64 may be arranged so that the axis C4 of the third rotating shaft 64 is positioned above the plane P.

### «Definition of terms or the like in the specification of the present application»

In the specification of the present application, "motorcycle" is not limited to a motorcycle in a so-called narrow sense. "Motorcycle" means a motorcycle in a so-called wide sense. Specifically, "motorcycle" in the specification of the present application means a general vehicle, in which a change of direction is performed by inclining a vehicle. Therefore, "motorcycle" is not limited to a motor bicycle. At least one of a front wheel and a rear wheel may comprise a plurality of wheels. Specifically, "motorcycle" may be a vehicle, in which at least one of a front wheel and a rear wheel comprises two wheels arranged adjacent to each other. "Motorcycle" includes at least a motorcycle in a narrow sense, a scooter type vehicle, a moped vehicle, and an offroad type vehicle.

### [Industrial Applicability]

The invention is useful for stepped automatic transmissions, power units, and motorcycles.

## Claims

1. A stepped automatic transmission provided with an input shaft (52) and an output shaft (33), comprising
a first rotating shaft (53), a second rotating shaft (54), and a third rotating shaft (64) connected to the output shaft (33), or constituting the output shaft (33), each of which shafts is arranged in a direction perpendicular to an axial direction of the input shaft (52),
a first clutch (55) including an input side clutch member (56), which rotates together with the input shaft (52), and an output side clutch member (57) being rotatable relative to the input shaft (52),
a first change gear pair (86) including a first gear (58), which rotates together with the output side clutch member of the first clutch (55), and a second gear (63), which meshes with the first gear (58) and rotates together with the first rotating shaft (53),
a first transmission gear pair (84) including a third gear (87), which rotates together with the first rotating shaft (53), and a fourth gear (75), which meshes with the third gear (87) and rotates together with the second rotating shaft (54),
a second transmission gear pair (85) including a fifth gear (74), which rotates together with the second rotating shaft (54), and a sixth gear (78), which meshes with the fifth gear (74) and rotates together with the third rotating shaft (64),
a first one-way rotation transmitting mechanism arranged between the second rotating shaft (54) and the fifth gear (74) to transmit rotation of the second rotating shaft (54) to the fifth gear (74) but not to transmit rotation of the fifth gear (74) to the second rotating shaft (54), or a second one-way rotation transmitting mechanism (93) arranged between the third rotating shaft (64) and the sixth gear (78) to transmit rotation of the sixth gear (78) to the third rotating shaft (64) but not to transmit rotation of the third rotating shaft (64) to the sixth gear (78),
a second clutch (70) including an input side clutch member (71), which rotates together with the second rotating shaft (54), and an output side clutch member (72) being rotatable relative to the second rotating shaft (54), and
a second change gear pair (91) including a seventh gear (73), which rotates together with the output side clutch member of the second clutch (70), and an eighth gear (77), which meshes with the seventh gear (73) and rotates together with the third rotating shaft (64), the second change gear pair (91) having a different gear ratio from that of the first change gear pair (86), and
wherein at least one of an axis (C2) of the first rotating shaft (53) and an axis (C4) of the third rotating shaft (64) is not present on a plane (P) including an axis (C1) of the input shaft (52) and an axis (C3) of the second rotating shaft (54),
**characterized by**
a third clutch (59) including an input side clutch member (56) that rotates together with the input shaft (52), and an output side clutch member (57) that is rotatable relative to the input shaft(52), and connected at that rotating speed of the input shaft (52), which is different from the rotating speed of the input shaft (52) when the first clotch (55) is connected, and
a third transmission gear pair (83) including a ninth gear (62) that rotates together with the output side clutch member (57) of the third clutch (59), and a tenth gear (65) that meshes with the ninth gear (62) and rotates together with the first rotating shaft (53), and having a different gear ratio from those of the first transmission gear pair (84) and the second transmission gear pair (85).

2. The stepped automatic transmission according to claim 1, wherein the axis (C2) of the first rotating shaft (53) is positioned on one side of the plane and the axis (C4) of the third rotating shaft (64) is positioned on the other side of the plane.

3. The stepped automatic transmission according to claim 2, further comprising a casing, in which the input shaft (52), the output shaft (33), the first rotating shaft (53), the second rotating shaft (54), and the third rotating shaft (64) are accommodated, and a lower portion of which is formed with an oil reservoir (99), and
wherein the axis (C2) of the first rotating shaft (53) is positioned above the plane (P) and the axis (C4) of the third rotating shaft (64) is positioned below the plane (P).

4. The stepped automatic transmission according to claim 1, further comprising a fourth clutch (66) including an input side clutch member (61), which rotates together with the second rotating shaft (54), and an output side clutch member (60) being rotatable relative to the second rotating shaft (54), the fourth clutch (66) being connected at a different rotating speed of the second rotating shaft (54) from that for the second clutch (70), and
a fourth change gear pair (90) including an eleventh gear (69), which rotates together with the output side clutch member of the fourth clutch (66), and a twelfth gear (76), which meshes with the eleventh gear (69) and rotates together with the third rotating shaft (64), the fourth change gear pair (90) having a different gear ratio from those of the first change gear pair (86), the second change gear pair (91), and the third change gear pair (83).

5. The stepped automatic transmission according to claim 1, wherein the third rotating shaft (64) is positioned forwardly of the second rotating shaft (54) in a longitudinal direction.

6. A power unit comprising a drive source (30) having a crank shaft (34), and a stepped automatic transmission (31) according to claim 1, wherein the input shaft (52) is connected to the drive source (30).

7. The power unit according to claim 6, wherein the drive source (30) further comprises a balancer including a balancer shaft (115) connected to the crank shaft (34), and
the first rotating shaft (53), the second gear (63), or at least a part of the third gear (87), and at least a part of the balancer are arranged to overlap as viewed in the axial direction of the first rotating shaft (53).

8. A motorcycle comprising the power unit (20) according to claim 6.

9. The motorcycle according to claim 8, wherein an axis (C3) of the second rotating shaft (54) is present above or below an axis (C1) of the input shaft (52).

10. The motorcycle according to claim 8, further comprising a body frame (10), from which the power unit (20) is suspended and which includes a rear frame portion (10a) positioned rearwardly of the power unit (20),
a rear wheel (18) rotating as the output shaft (33) rotates, and
a rear arm (28), one end of which is mounted to the rear frame portion (10a) to be able to swing, and the other end of which is rotatably mounted the rear wheel (18).

## Patentansprüche

1. Ein automatisches Stufengetriebe, das mit einer Eingangswelle (52) und einer Ausgangswelle (33) bereitgestellt ist, das folgende Merkmale aufweist:
eine erste Drehwelle (53), eine zweite Drehwelle (54) und eine dritte Drehwelle (64), die mit der Ausgangswelle (33) verbunden sind oder die Ausgangswelle (33) bilden, wobei jede der Wellen in einer Richtung senkrecht zu einer axialen Richtung der Eingangswelle (52) angeordnet ist,
eine erste Kupplung (55), die ein Eingangsseitenkupplungsbauglied (56) umfasst, das sich zusammen mit der Eingangswelle (52) dreht, und ein Ausgangsseitenkupplungsbauglied (57), das relativ zu der Eingangswelle (52) drehbar ist,
ein erstes Änderungszahnradpaar (86), das ein erstes Zahnrad (58), das sich zusammen mit dem Ausgangsseitenkupplungsbauglied der ersten Kupplung (55) dreht, und ein zweites Zahnrad (63) umfasst, das in das erste Zahnrad (58) eingreift und sich zusammen mit der ersten Drehwelle (53) dreht,
ein erstes Getriebezahnradpaar (84), das ein drittes Zahnrad (87) umfasst, das sich zusammen mit der ersten Drehwelle (53) dreht, und ein viertes Zahnrad (57), das in das dritte Zahnrad (87) eingreift und sich zusammen mit der zweiten Drehwelle (54) dreht,
ein zweites Getriebezahnradpaar (85), das ein fünftes Zahnrad (74) umfasst, das sich zusammen mit der zweiten Drehwelle (54) dreht, und ein sechstes Zahnrad (78), das in das fünfte Zahnrad (74) eingreift, und sich zusammen mit der dritten Drehwelle (64) dreht,
einen ersten Einweg-Dreh-Übertragungsmechanismus, der zwischen der zweiten Drehwelle (54) und dem fünften Zahnrad (74) angeordnet ist, um eine Drehung der zweiten Drehwelle (54) auf das fünfte Zahnrad (74) zu übertragen, aber keine Drehung des fünften Zahnrads (74) auf die zweite Drehwelle (54) zu übertragen, oder einen zweiten Einweg-Dreh-Übertragungsmechanismus (93), der zwischen der dritten Drehwelle (64) und dem sechsten Zahnrad (78) angeordnet ist, um eine Drehung des sechsten Zahnrads (78) zu der dritten Drehwelle (64) zu übertragen, aber keine Drehung der dritten Drehwelle (64) auf das sechste Zahnrad (78) zu übertragen,
eine zweite Kupplung (70), die ein Eingangsseitenkupplungsbauglied (71) umfasst, das sich zusammen mit der zweiten Drehwelle (54) dreht, und ein Ausgangsseitenkupplungsbauglied (72), das relativ zu der zweiten Drehwelle (54) drehbar ist, und
ein zweites Änderungszahnradpaar (91), das ein siebtes Zahnrad (73) umfasst, das sich zusammen mit dem Ausgangsseitenkupplungsbauglied der zweiten Kupplung (70) dreht, und ein achtes Zahnrad (77), das in das siebte Zahnrad (73) eingreift, und sich zusammen mit der dritten Drehwelle (64) dreht, wobei das zweite Änderungszahnradpaar (91) ein unterschiedliches Zahnradverhältnis zu dem des ersten Änderungszahnradpaars (86) aufweist, und
wobei zumindest entweder eine Achse (C2) der ersten Drehwelle (53) oder eine Achse (C4) der dritten Drehwelle (64) nicht auf einer Ebene (P) vorhanden ist, die eine Achse (C1) der Eingangswelle (52) und eine Achse (C3) der zweiten Drehwelle (54) umfasst,
**gekennzeichnet durch**
eine dritte Kupplung (59), die ein Eingangsseitenkupplungsbauglied (56) umfasst, das sich zusammen mit der Eingangswelle (52) dreht, und ein Ausgangsseitenkupplungsbauglied (57), das relativ zu der Eingangswelle (52) drehbar ist und bei der Drehgeschwindigkeit der Eingangswelle (52) verbunden ist, die unterschiedlich zu der Drehgeschwindigkeit der Eingangswelle (52) ist, wenn die erste Kupplung (55) verbunden ist, und
ein drittes Getriebezahnradpaar (83), das ein neuntes Zahnrad (62) umfasst, das sich zusammen mit dem Ausgangsseitenkupplungsbauglied (57) der dritten Kupplung (59) dreht, und ein zehntes Zahnrad (65), das in das neunte Zahnrad (62) eingreift und sich zusammen mit der ersten Drehwelle (53) dreht und ein unterschiedliches Zahnradverhältnis zu jenen des ersten Getriebezahnradpaars (84) und des zweiten Getriebezahnradpaars (85) aufweist.

2. Das automatische Stufengetriebe gemäß Anspruch 1, bei dem die Achse (C2) der ersten Drehwelle (53) auf einer Seite der Ebene positioniert ist und die Achse (C4) der dritten Drehwelle (64) auf der anderen Seite der Ebene positioniert ist.

3. Das automatische Stufengetriebe gemäß Anspruch 2, das ferner ein Gehäuse aufweist, in dem die Eingangswelle (52), die Ausgangswelle (33), die erste Drehwelle (53), die zweite Drehwelle (54) und die dritte Drehwelle (64) untergebracht sind, und einen unteren Abschnitt, aus dem ein Ölreservoir (99) gebildet ist, und
wobei die Achse (C2) der ersten Drehwelle (53) über der Ebene (P) positioniert ist und die Achse (C4) der dritten Drehwelle (64) unter der Ebene (P) positioniert ist.

4. Das automatische Stufengetriebe gemäß Anspruch 1, das ferner eine vierte Kupplung (66) aufweist, die ein Eingangsseitenkupplungsbauglied (61) umfasst, das sich zusammen mit der zweiten Drehwelle (54) dreht, und ein Ausgangsseitenkupplungsbauglied (60), das relativ zu der zweiten Drehwelle (54) drehbar ist, wobei die vierte Kupplung (66) bei einer unterschiedlichen Drehgeschwindigkeit der zweiten Drehwelle (54) zu der der zweiten Kupplung (70) verbunden ist, und
ein viertes Änderungszahnradpaar (90), das ein elftes Zahnrad (69) umfasst, das sich zusammen mit dem Ausgangsseitenkupplungsbauglied der vierten Kupplung (66) dreht, und ein zwölftes Zahnrad (76), das in das elfte Zahnrad (69) eingreift und sich zusammen mit der dritten Drehwelle (64) dreht, wobei das vierte Änderungszahnradpaar (90) ein unterschiedliches Zahnradverhältnis zu jenen des ersten Änderungszahnradpaars (86), des zweiten Änderungszahnradpaars (91) und des dritten Änderungszahnradpaars (83) aufweist.

5. Das automatische Stufengetriebe gemäß Anspruch 1, bei dem die dritte Drehwelle (64) vorwärts von der zweiten Drehwelle (54) in einer Längsrichtung positioniert ist.

6. Eine Leistungseinheit, die eine Antriebsquelle (30) mit einer Kurbelwelle (34) aufweist und ein automatisches Stufengetriebe (31) gemäß Anspruch 1, bei dem die Eingangswelle (52) mit der Antriebsquelle (30) verbunden ist.

7. Die Leistungseinheit gemäß Anspruch 6, bei der die Antriebsquelle (30) ferner einen Ausgleicher aufweist, der eine Ausgleichswelle (115) umfasst, die mit der Kurbelwelle (34) verbunden ist, und
die erste Drehwelle (53), das zweite Zahnrad (63) oder zumindest ein Teil des dritten Zahnrads (87) und zumindest ein Teil des Ausgleichers angeordnet sind, um zu überlappen, betrachtet in der axialen Richtung der ersten Drehwelle (53).

8. Ein Motorrad, das die Leistungseinheit (20) gemäß Anspruch 6 aufweist.

9. Das Motorrad gemäß Anspruch 8, bei dem eine Achse (C3) der zweiten Drehwelle (54) über oder unter einer Achse (C1) der Eingangswelle (52) vorhanden ist.

10. Das Motorrad gemäß Anspruch 8, das ferner einen Körperrahmen (10) aufweist, von dem die Leistungseinheit (20) aufgehängt ist und der einen hinteren Rahmenabschnitt (10a) umfasst, der rückwärts von der Leistungseinheit (20) positioniert ist,
ein Hinterrad (18), das sich dreht, wenn sich die Ausgangswelle (33) dreht, und
einen Hinterarm (28), wobei ein Ende desselben an dem hinteren Rahmenabschnitt (10a) befestigt ist, um in der Lage zu sein, zu schwingen, und wobei das andere Ende desselben drehbar an dem Hinterrad (18) befestigt ist.

## Revendications

1. Transmission automatique étagée pourvue d'un arbre d'entrée (52) et d'un arbre de sortie (33), comprenant
un premier arbre de rotation (53), un deuxième arbre de rotation (54), et un troisième arbre de rotation (64) connectés à l'arbre de sortie (33), ou constituant l'arbre de sortie (33), chacun de ces arbres étant disposé dans une direction perpendiculaire à une direction axiale de l'arbre d'entrée (52),
un premier embrayage (55) comportant un élément d'embrayage du côté de l'entrée (56) qui tourne ensemble avec l'arbre d'entrée (52), et un élément d'embrayage du côté de la sortie (57) pouvant tourner par rapport à l'arbre d'entrée (52), une première paire d'engrenages de changement de vitesse (86) comportant un premier engrenage (58) qui tourne ensemble avec l'élément d'embrayage du côté de la sortie du premier embrayage (55), et un deuxième engrenage (63) qui engrène le premier engrenage (58) et tourne ensemble avec le premier arbre de rotation (53),
une première paire d'engrenages de transmission (84) comportant un troisième engrenage (87) qui tourne ensemble avec le premier arbre de rotation (53), et un quatrième engrenage (75) qui engrène le troisième engrenage (87) et tourne ensemble avec le deuxième arbre de rotation (54),
une deuxième paire d'engrenages de transmission (85) comportant un cinquième engrenage (74) qui tourne ensemble avec le deuxième arbre de rotation (54), et un sixième engrenage (78) qui engrène le cinquième engrenage (74) et tourne ensemble avec le troisième arbre de rotation (64),
un premier mécanisme de transmission de rotation unidirectionnelle disposé entre le deuxième arbre de rotation (54) et le cinquième engrenage (74), pour transmettre la rotation du deuxième arbre de rotation (54) au cinquième engrenage (74), mais ne pas transmettre la rotation du cinquième engrenage (74) au deuxième arbre de rotation (54), ou un deuxième mécanisme de transmission de rotation unidirectionnelle (93) disposé entre le troisième arbre de rotation (64) et le sixième engrenage (78), pour transmettre la rotation du sixième engrenage (78) au troisième arbre de rotation (64), mais ne pas transmettre la rotation du troisième arbre de rotation (64) au sixième engrenage (78),
un deuxième embrayage (70) comportant un élément d'embrayage du côté de l'entrée (71) qui tourne ensemble avec le deuxième arbre de rotation (54), et un élément d'embrayage du côté de la sortie (72) pouvant tourner par rapport au deuxième arbre de rotation (54), et
une deuxième paire d'engrenages de changement de vitesse (91) comprenant un septième engrenage (73) qui tourne ensemble avec l'élément d'embrayage du côté de la sortie du deuxième embrayage (70), et un huitième engrenage (77) qui engrène le septième engrenage (73) et tourne ensemble avec le troisième arbre de rotation (64), la deuxième paire d'engrenages de changement de vitesse (91) ayant un rapport d'engrenage différent de celui de la première paire d'engrenages de changement de vitesse (86), et
dans laquelle au moins l'un parmi un axe (C2) du premier arbre de rotation (53) et un axe (C4) du troisième arbre de rotation (64) n'est pas présent dans un plan (P) comportant un axe (C1) de l'arbre d'entrée (52) et un axe (C3) du deuxième arbre de rotation (54),
**caractérisée par**
un troisième embrayage (59) comprenant un élément d'embrayage du côté de l'entrée (56) qui tourne ensemble avec l'arbre d'entrée (52), et un élément d'embrayage du côté de la sortie (57) qui peut tourner par rapport à l'arbre d'entrée (52), et est connecté à la vitesse de rotation de l'arbre d'entrée (52) qui est différente de la vitesse de rotation de l'arbre d'entrée (52) lorsque le premier embrayage (55) est connecté, et
une troisième paire d'engrenages de transmission (83) comportant un neuvième engrenage (62) qui tourne ensemble avec l'élément d'embrayage du côté de la sortie (57) du troisième embrayage (59), et un dixième engrenage (65) qui engrène le neuvième engrenage (62) et tourne ensemble avec le premier arbre de rotation (53), et ayant un rapport d'engrenage différent de ceux de la première paire d'engrenages de transmission (84) et de la deuxième paire d'engrenage de transmission (85).

2. Transmission automatique étagée selon la revendication 1, dans laquelle l'axe (C2) du premier arbre de rotation (53) est positionné d'un côté du plan et l'axe (C4) du troisième arbre de rotation (64) est positionné de l'autre côté du plan.

3. Transmission automatique étagée selon la revendication 2, comprenant par ailleurs un boîtier dans lequel sont logés l'arbre d'entrée (52), l'arbre de sortie (33), le premier arbre de rotation (53), le deuxième arbre de rotation (54), et le troisième arbre de rotation (64), et dont une partie inférieure est formée avec un réservoir d'huile (99), et
dans laquelle l'axe (C2) du premier arbre de rotation (53) est positionné au-dessus du plan (P) et l'axe (C4) du troisième arbre de rotation (64) est positionné au-dessous du plan (P).

4. Transmission automatique étagée selon la revendication 1, comprenant par ailleurs un quatrième embrayage (66) comportant un élément d'embrayage du côté de l'entrée (61) qui tourne ensemble avec le deuxième arbre de rotation (54), et un élément d'embrayage du côté de la sortie (60) pouvant tourner par rapport au deuxième arbre de rotation (54), le quatrième embrayage (66) étant connecté à une vitesse de rotation différente du deuxième arbre de rotation (54) de celle pour le deuxième embrayage (70), et
une quatrième paire d'engrenages de changement de vitesse (90) comportant un onzième engrenage (69) qui tourne ensemble avec l'élément d'embrayage du côté de la sortie du quatrième d'embrayage (66), et un douzième engrenage (76) qui engrène l'onzième engrenage (69) et tourne ensemble avec le troisième arbre de rotation (64), la quatrième paire d'engrenages de changement de vitesse (90) ayant un rapport d'engrenage différent de ceux de la première paire d'engrenages de changement de vitesse (86), de la deuxième paire d'engrenages de changement de vitesse (91), et de la troisième paire d'engrenages de changement de vitesse (83).

5. Transmission automatique étagée selon la revendication 1, dans laquelle le troisième arbre de rotation (64) est positionné à l'avant du deuxième arbre de rotation (54) dans une direction longitudinale.

6. Unité motrice comprenant une source d'entraînement (30) présentant un vilebrequin (34), et une transmission automatique étagée (31) selon la revendication 1, dans laquelle l'arbre d'entrée (52) est connecté à la source d'entraînement (30).

7. Unité motrice selon la revendication 6, dans laquelle la source d'entraînement (30) comprend par ailleurs un balancier comprenant un arbre de balancier (115) connecté au vilebrequin (34), et
le premier arbre de rotation (53), le deuxième engrenage (63), ou au moins une partie du troisième engrenage (87), et au moins une partie du balancier sont disposés de manière à se chevaucher, vu dans la direction axiale du premier arbre de rotation (53).

8. Motocyclette comprenant l'unité motrice (20) selon la revendication 6.

9. Motocyclette selon la revendication 8, dans laquelle un axe (C3) du deuxième arbre de rotation (54) est présent au-dessus ou au-dessous d'un axe (C1) de l'arbre d'entrée (52).

10. Motocyclette selon la revendication 8, comprenant par ailleurs un châssis de corps (10), auquel est suspendue l'unité motrice (20) et qui comporte une partie de châssis arrière (10a) positionnée vers l'arrière de l'unité motrice (20),
une roue arrière (18) tournant au fur et à mesure que tourne l'arbre de sortie (33), et
un bras arrière (28) dont une extrémité est montée sur la partie de châssis arrière (10a) de manière à pouvoir osciller, et dont l'autre extrémité est montée de manière rotative sur la roue arrière (18).
